(19) Europäisches Patentamt / European Patent Office / Office européen des brevets

(11) **EP 4 270 546 A1**

(12) **EUROPEAN PATENT APPLICATION**
published in accordance with Art. 153(4) EPC

(43) Date of publication:
**01.11.2023 Bulletin 2023/44**

(21) Application number: **21910297.7**

(22) Date of filing: **07.12.2021**

(51) International Patent Classification (IPC):
$H01M\ 4/525^{(2010.01)}$ $\quad$ $H01M\ 4/36^{(2006.01)}$
$H01M\ 4/485^{(2010.01)}$ $\quad$ $H01M\ 4/505^{(2010.01)}$
$H01M\ 10/052^{(2010.01)}$ $\quad$ $H01M\ 10/0562^{(2010.01)}$

(52) Cooperative Patent Classification (CPC):
H01M 4/36; H01M 4/485; H01M 4/505;
H01M 4/525; H01M 10/052; H01M 10/0562;
Y02E 60/10

(86) International application number:
**PCT/JP2021/045009**

(87) International publication number:
**WO 2022/138148 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020 PCT/JP2020/048035**
**26.03.2021 PCT/JP2021/013156**

(71) Applicant: **NGK Insulators, Ltd.**
**Nagoya city, Aichi 467-8530 (JP)**

(72) Inventors:
• **NISHIZAKI, Tsutomu**
**Nagoya-City, Aichi 467-8530 (JP)**
• **HIROSE, Mizuki**
**Nagoya-City, Aichi 467-8530 (JP)**
• **KOBAYASHI, Yoshimasa**
**Nagoya-City, Aichi 467-8530 (JP)**
• **KATSUDA, Yuji**
**Nagoya-City, Aichi 467-8530 (JP)**

(74) Representative: **MERH-IP Matias Erny Reichl
Hoffmann
Patentanwälte PartG mbB
Paul-Heyse-Strasse 29
80336 München (DE)**

(54) **POSITIVE ELECTRODE ACTIVE MATERIAL AND LITHIUM-ION SECONDARY BATTERY**

(57)    There is provided a positive electrode active material capable of greatly improving the cycle characteristic when incorporated in a lithium ion secondary battery. The positive electrode active material contains a lithium composite oxide having a layered rock salt structure containing Li, Ni, Co and Mn, and further contains at least one additive selected from $Li_3BO_3$, $Li_3PO_4$ and $Li_2SO_4$.

FIG. 3

**EP 4 270 546 A1**

**Description**

TECHNICAL FIELD

The present invention relates to a positive electrode active material to be used for a lithium ion secondary battery, and a lithium ion secondary battery.

BACKGROUND ART

As a positive electrode active material layer for lithium ion secondary batteries, there is broadly known a positive electrode of a dispersed power type obtained by kneading and shaping a powder of a lithium composite oxide (typically, a lithium transition metal oxide) and additives such as a binder and an electrically conductive agent. Since the positive electrode of a dispersed power type contains a relatively large amount (for example, about 10% by weight) of a binder not contributing to the capacity, the filling density of the lithium composite oxide as its positive electrode active material is low. The positive electrode of a dispersed power type thus has large room for improvement in the capacity and the charge/discharge efficiency. Then, an attempt is made to improve the capacity and the charge/discharge efficiency by constituting the positive electrode or the positive electrode active material layer of a lithium composite oxide sintered plate. In this case, since the positive electrode or the positive electrode active material layer contains no binder, the filling density of the lithium composite oxide becomes high, whereby a high capacity and a good charge/discharge efficiency are expected to be attained.

In addition, in lithium ion secondary batteries, a liquid electrolyte (electrolytic solution) using a flammable organic solvent as a diluting solvent is conventionally used as a medium for allowing ions to migrate. In batteries using such an electrolytic solution, problems might be posed such as leakage, inflammation and explosion of an electrolytic solution. In order to solve such problems and secure essential safety, all-solid-state batteries are under development in which a solid electrolyte is used in place of a liquid electrolyte and all of other elements are composed of solids. Since the electrolyte is a solid, the all-solid-state batteries have no possibility of inflammation, cause no leakage and are less likely to pose problems such as deterioration of battery performance due to corrosion.

There are proposed various all-solid-state batteries using a sintered electrode and a solid electrolyte. For example, Patent Literature 1 (WO2019/093222A1) discloses an all-solid-state lithium battery including an oriented positive electrode plate which is a lithium composite oxide sintered plate having a void ratio of 10 to 50%, a negative electrode plate which contains Ti and is capable of intercalating and deintercalating lithium ions at 0.4 V (vs. Li/Li$^+$) or higher, and a solid electrolyte which has a lower melting point than the melting point or the decomposition temperature of the oriented positive electrode plate or the negative electrode plate. In the literature, as solid electrolytes having such a low melting point, various materials are disclosed such as Li$_3$OCl, and $x$LiOH·$y$Li$_2$SO$_4$ wherein $x+y = 1$, $0.6 \leq x \leq 0.95$ (for example, 3LiOH·Li$_2$SO$_4$). Such a solid electrolyte can be allowed to penetrate as a melt into voids of an electrode plate and can attain a firm interfacial contact. As a result, it is reportedly possible to attain a remarkable improvement in the battery resistance and the rate performance in charge/discharge, and a large improvement in the yield in the battery production. In addition, Patent Literature 2 (WO2015/151566A1) discloses an all-solid-state lithium battery having an oriented positive electrode plate which has a layered rock salt structure of a basic composition represented by Li$_p$(Ni$_x$,Co$_y$,Mn$_z$)O$_2$ wherein $0.9 \leq p \leq 1.3$, $0 < x < 0.8$, $0 < y < 1$, $0 \leq z \leq 0.7$, $x + y + z = 1$, a solid electrolyte layer composed of a Li-La-Zr-O-based ceramic material and/or a lithium phosphate oxynitride (LiPON)-based ceramic material, and a negative electrode layer.

CITATION LIST

PATENT LITERATURE

Patent Literature 1: WO2019/093222A1
Patent Literature 2: WO2015/151566A1

SUMMARY OF INVENTION

The present inventors have a finding that among the above-mentioned low-melting point solid electrolytes, particularly, a LiOH·Li$_2$SO$_4$-based solid electrolyte such as 3LiOH·Li$_2$SO$_4$ exhibits a high lithium ionic conductivity. However, as disclosed as Comparative Example in Patent Literature 1, when a cell is constituted by using a Li-OH·Li$_2$SO$_4$-based solid electrolyte such as 3LiOH·Li$_2$SO$_4$ for a non-oriented sintered plate electrode and its battery is operated, there is a problem that the cycle characteristic becomes low. Since a non-oriented sintered plate has an advantage of being hardly susceptible to the restriction of raw material powders in control of the microstructure such as pore diameter, it is favorable if the cycle characteristic can be improved by using a non-oriented sintered plate. It can of course be said that the improvement in the cycle characteristic is similarly desired also in mixture electrodes, not limited to sintered plate electrodes.

The present inventors have currently found that the cycle characteristic can greatly be improved by incorporating at least one additive selected from $Li_3BO_3$, $Li_3PO_4$ and $Li_2SO_4$ in a lithium composite oxide to be used for a positive electrode of a lithium ion secondary battery.

Therefore, an object of the present invention is to provide a positive electrode active material capable of greatly improving the cycle characteristic when incorporated in a lithium ion secondary battery.

According to an aspect of the present invention, there is provided a positive electrode active material to be used for a lithium ion secondary battery,
wherein the positive electrode active material comprises a lithium composite oxide having a layered rock salt structure containing Li, Ni, Co and Mn, and further comprises at least one additive selected from $Li_3BO_3$, $Li_3PO_4$ and $Li_2SO_4$.

According to another aspect of the present invention, there is provided a lithium ion secondary battery, comprising:

a positive electrode layer comprising the positive electrode active material;
a negative electrode layer comprising a negative electrode active material; and
a $LiOH \cdot Li_2SO_4$-based solid electrolyte interposed between the positive electrode layer and the negative electrode layer.

BRIEF DESCRIPTION OF DRAWINGS

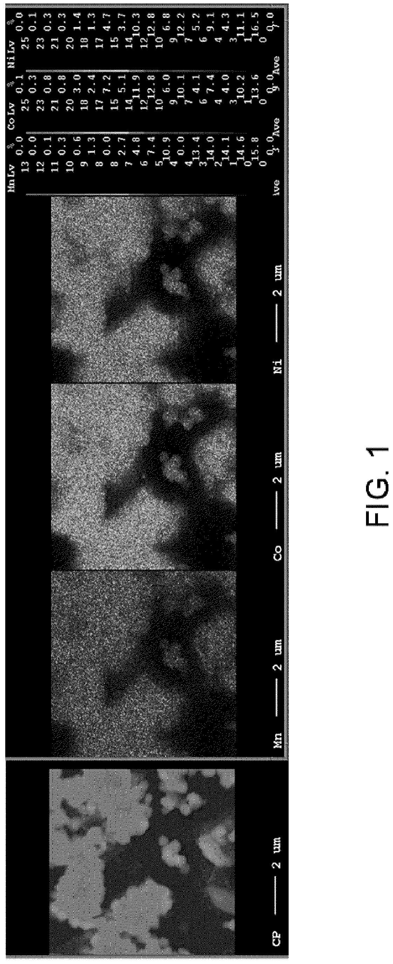

Figure 1 is an electron microscope photograph and EPMA mapping images of a positive electrode active material (NCM)/solid electrolyte cross-section of an all-solid-state battery prepared in Example 3. The image positioned on the leftmost side is an electron microscope photograph (white portions correspond to NCM, and black portions correspond to solid electrolyte), and rightward therefrom, EPMA mapping images of Mn, Co and Ni are shown in order.

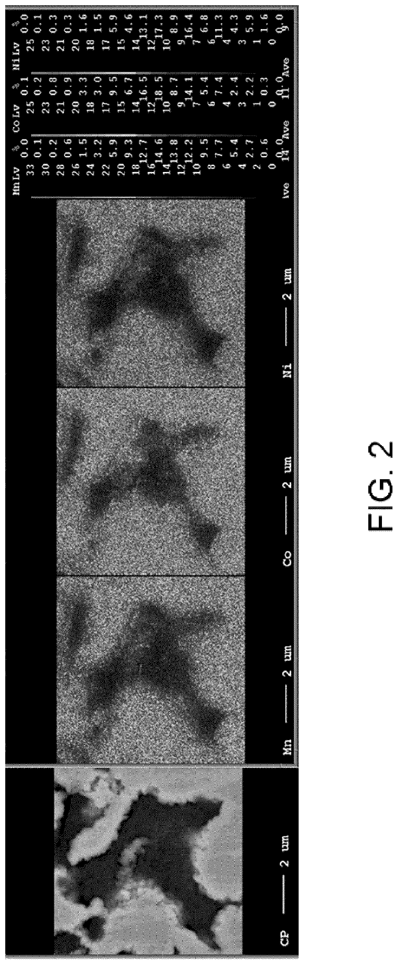

Figure 2 is an electron microscope photograph and EPMA mapping images of a positive electrode active material (NCM)/solid electrolyte cross-section of an all-solid-state battery prepared in Example 14. The image positioned on the leftmost side is an electron microscope photograph (white portions correspond to NCM, and black portions correspond to solid electrolyte), and rightward therefrom, EPMA mapping images of Mn, Co and Ni are shown in order.

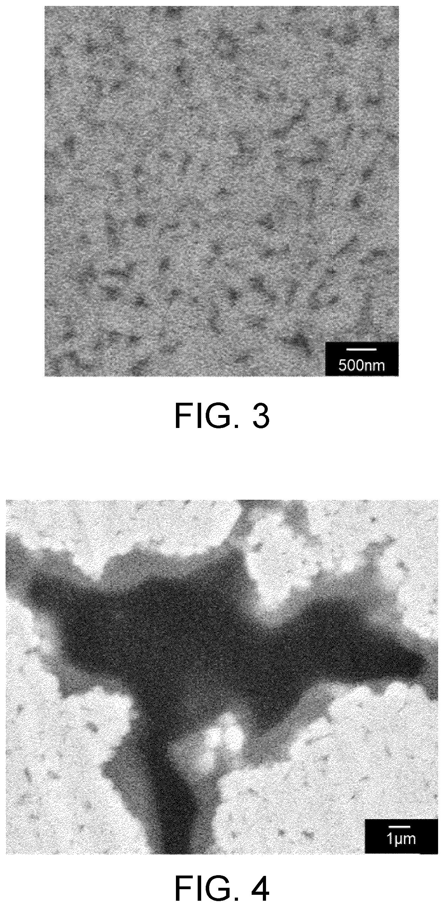

Figure 3 is an electron microscope photograph (reflection electron image) of a cross-section of a positive electrode plate prepared in Example 8.
Figure 4 is an electron microscope photograph (reflection electron image) of a cross-section of a positive electrode plate prepared in Example 12 after being embedded in a resin.

DESCRIPTION OF EMBODIMENTS

Positive electrode active material

The positive electrode active material according to the present invention is one used for a lithium ion secondary battery. The positive electrode active material contains a lithium composite oxide having a layered rock salt structure containing Li, Ni, Co and Mn. Then, the positive electrode active material further contains at least one additive selected from $Li_3BO_3$, $Li_3PO_4$ and $Li_2SO_4$. In this way, by incorporating at least one additive selected from $Li_3BO_3$, $Li_3PO_4$ and $Li_2SO_4$ in a lithium composite oxide to be used for a lithium ion secondary battery, the cycle characteristic (particularly, cycle retention rate) can greatly be improved.

As described above, although when a cell is constituted by using a $LiOH \cdot Li_2SO_4$-based solid electrolyte such as $3LiOH \cdot Li_2SO_4$ for a non-oriented sintered electrode and its battery is operated, there is a problem that the cycle characteristic becomes low, according to the present invention, such a problem is favorably solved. For example, a lithium ion secondary battery having a positive electrode layer containing a positive electrode active material containing a lithium composite oxide having at least one selected from $Li_3BO_3$, $Li_3PO_4$ and $Li_2SO_4$ added thereto, a $LiOH \cdot Li_2SO_4$-based solid electrolyte, and a negative electrode layer has a higher cycle retention rate as compared with a battery using a lithium composite oxide with no additive. Its mechanism, though not being clear, is conceivably as follows. First, the causes of the deterioration of the cycle characteristic are presumably (1) that the solid electrolyte is deteriorated by occurrence of side reactions at interfaces between the positive electrode and the solid electrolyte in charge/discharge, and (2) that minute cracks are generated at grain boundaries of the lithium composite oxide by expansion and contraction of the lithium composite oxide along with charge/discharge. With regard to this point, it is presumed that in the present invention, with regard to the cause of the above (1), $Li_3BO_3$, $Li_3PO_4$ and/or $Li_2SO_4$ deposited on at least a part of the surface of the lithium composite oxide suppresses the side reactions. Then, it is presumed that with regard to the cause of the above (2), $Li_3BO_3$, $Li_3PO_4$ and/or $Li_2SO_4$ deposited on at least a part of a grain boundary relaxes stresses of the expansion and contraction. Therefore, it is preferable that the additive is present in the state of deposited on at least a part of a grain boundary and of a surface of the lithium composite oxide.

The positive electrode active material contains the lithium composite oxide having a layered rock salt structure containing Li, Ni, Co and Mn. The lithium composite oxide is one also called lithium cobaltate-nickelate-manganate, and abbreviated to NCM. The layered rock salt structure refers to a crystal structure in which a lithium layer and a transition metal layer other than lithium are alternately laminated with a layer of oxygen being sandwiched therebetween (typically, an $\alpha$-$NaFeO_2$-type structure: a structure in which a transition metal and lithium are orderly arranged in the [111] axis of the cubic rock salt-type structure). A typical NCM has a composition represented by $Li_p(Ni_x, Co_y, Mn_z)O_2$ wherein $0.9 \leq p \leq 1.3$, $0 < x < 0.8$, $0 < y < 1$, $0 \leq z \leq 0.7$, $x + y + z = 1$; preferably, $0.95 \leq p \leq 1.10$, $0.1 \leq x < 0.7$, $0.1 \leq y < 0.9$, $0 \leq z \leq 0.6$, $x + y + z = 1$, and is, for example, $Li(Ni_{0.5}Co_{0.2}Mn_{0.3})O_2$ and $Li(Ni_{0.3}Co_{0.6}Mn_{0.1})O_2$. Therefore, the molar ratio of Li/(Ni+Co+Mn) in the positive electrode active material is preferably 0.95 to 1.10, more preferably 0.97 to 1.08 and still more preferably 0.98 to 1.05.

As described above, while the positive electrode active material according to the present invention is to be used for a lithium ion secondary battery, it is preferable that the positive electrode is in a form of a sintered plate made by sintering a positive electrode raw material powder. That is, the positive electrode active material is preferably in a form of a sintered plate. In other words, it is preferable that the positive electrode active material has a structure in which a plurality of primary particles having a layered rock salt structure containing Li, Ni, Co and Mn are bound. Since the sintered plate does not have to contain an electron conductive auxiliary of a binder, the energy density of the positive electrode can be increased. The sintered plate may be a compact body or a porous body, and a solid electrolyte may be contained in pores of the porous body. The positive electrode, however, may also be in a form generally called a mixture electrode, for example, a mixture of the positive electrode active material, an electron conductive auxiliary, a lithium ionic conductive material, a binder and the like, or a form (mixture form) made by forming a mixture of the positive electrode active material, a $LiOH \cdot Li_2SO_4$-based solid electrolyte, an electron conductive auxiliary and the like. In this case, the positive electrode active material may be in a powdery form. Therefore, the positive electrode active material may be a mixed powder containing a powder of the lithium composite oxide, and at least one powder selected from $Li_3BO_3$, $Li_3PO_4$ and $Li_2SO_4$.

The content (that is, the content proportion of the additives to the total content of the lithium composite oxide and the additives) of the additives in the positive electrode active material is, without regard to the form (sintered plate or mixture) of the positive electrode, from the viewpoint of the improvement in the cycle characteristic, preferably 0.1 to 10% by weight, more preferably 0.5 to 7.0% by weight and still more preferably 1.0 to 6.0% by weight. Here, it is considered that with regard to the above content of the additives, the amount of the additives charged in preparation of the positive electrode active material is nearly equal to the content of the additives in the positive electrode active material finally obtained. This is presumable, for example, from that almost no weight change occurs in the case of thermogravimetry (TG) of simple substances of the additives.

In the case where the positive electrode active material is in a form of a sintered plate, the degree of orientation of the sintered plate, $I_{[003]}/I_{[104]}$, defined as a ratio of the diffraction intensity $I_{[003]}$ derived from the (003) plane to the diffraction intensity $I_{[104]}$ derived from the (104) plane, in an XRD profile measured by X-ray diffraction (XRD), is 1.2 to 3.6, preferably 1.2 to 3.5, more preferably 1.2 to 3.0 and still more preferably 1.2 to 2.6. Here, the lithium composite oxide having a layered rock salt-type crystal structure like NCM has crystal planes (planes other than the (003) plane, for example, the (101) plane and the (104) plane), where going-in and going-out of lithium ions well occur, and the (003) plane, where that does not occur. Herein, each diffraction intensity of the (003) plane and the (104) plane by XRD among these is used for convenience as an index for calculation of the degree of orientation. When the sintered plate has a degree of orientation, $I_{[003]}/I_{[104]}$, in the above-mentioned range, the degree of orientation becomes equal or nearly equal to the degrees of orientation, $I_{[003]}/I_{[104]}$, of NCM powders which become a measure of non-orientation (for example, 1.4 (a composition of Ni : Co : Mn = 5 : 2 : 3) and 2.3 (a composition of Ni : Co : Mn = 3 : 6 : 1), and therefore it can be said that the sintered plate is nearly in a non-oriented (random) state, that is, is substantially not oriented (or is not much oriented). As described above, since the non-oriented sintered body has an advantage of being hardly susceptible to the restriction of raw material powders in control of the microstructure such as pore diameter, it becomes easy to select raw material powders favorable in order to control the microstructure (for example, pore diameter) of the sintered body, and it becomes easier to attain an improvement in the cycle characteristic.

In the case where the positive electrode active material is in a form of the sintered plate, the porosity of the sintered plate is preferably 20 to 40%, more preferably 20 to 38%, still more preferably 20 to 36% and especially preferably 20 to 33%. When the porosity is in such a range, pores can sufficiently be filled with a solid electrolyte and the proportion of a positive electrode active material in a positive electrode is increased in preparation of a battery, leading to achievement of a high energy density as a battery.

The "porosity" herein is a volume ratio of pores in a sintered plate. The porosity can be measured by image analysis of a cross-sectional SEM image of the sintered plate. For example, the porosity (%) of a sintered plate may be determined by embedding a sintered plate in a resin; subjecting the resin-embedded sintered plate to cross-sectional polishing by ion milling; observing the polished cross-section by a SEM (scanning electron microscope) to acquire a cross-sectional SEM image (for example, a magnification of 500 to 1,000 times); and analyzing the acquired SEM image to calculate the proportion (%) of the area of parts filled with the resin in the total area consisting of parts of an electrode active material and the parts filled with the resin (parts which were pores originally). If the measurement can be carried out in a desired accuracy, the porosity may also be measured without embedding the sintered plate in the resin. For example, the measurement of the porosity of a sintered plate filled with a solid electrolyte in pores (a positive electrode plate taken out from an all-solid-state secondary battery) can be made in the state that the solid electrolyte remains filled.

In the case where the positive electrode active material is in a form of the sintered plate, the mean pore diameter of the sintered plate is preferably 3.5 $\mu$m or larger, more preferably 3.5 to 15.0 $\mu$m, still more preferably 3.5 to 10.0 $\mu$m and especially preferably 3.5 to 8.0 $\mu$m. Such a range leads to an increase of a solid electrolyte part (solid electrolyte part at distances apart from the interface) hardly susceptible to deterioration due to side reactions between the solid electrolyte and the lithium composite oxide. Hence, it is considered that the elemental diffusion between the solid electrolyte and the lithium composite oxide is suppressed and the reduction of the Li ionic conduction due to the deterioration of the solid electrolyte is alleviated, whereby the discharge capacity and the cycle characteristic are more effectively improved.

The "mean pore diameter" herein is a mean value of the diameters of pores contained in a sintered plate of an electrode. The "diameter" is typically a length of a line segment bisecting the projected area of the pore (Martin diameter). In the present invention, the "mean value" calculated on the number base is suitable. The mean pore diameter can be measured by image analysis of a cross-sectional SEM image of the sintered plate. For example, the mean pore diameter of the sintered plate may be determined by analyzing the SEM image acquired in the above-mentioned porosity measurement to divide parts of an electrode active material from parts filled with a resin (parts which were pores originally) in a sintered plate; determining the maximum Martin diameter in each of regions of the parts filled with a resin; and calculating the mean value of the maximum Martin diameters as the mean pore diameter of the sintered plate. If the measurement can be carried out in a desired accuracy, the mean pore diameter may be measured without embedding the sintered plate in the resin. For example, the measurement of the mean pore diameter of a sintered plate filled with a solid electrolyte in pores (a positive electrode plate taken out from an all-solid-state secondary battery) can be made in the state that the solid electrolyte remains filled.

In the case where the positive electrode active material is in a form of the sintered plate, the interfacial length per 1 $\mu$m$^2$ of unit cross-sectional area of the sintered plate is preferably 0.45 $\mu$m or shorter, more preferably 0.10 to 0.40 $\mu$m, still more preferably 0.10 to 0.35 $\mu$m and especially preferably 0.10 to 0.30 $\mu$m. Such a range leads to a reduction of the site where the lithium composite oxide and the solid electrolyte cause side reactions. Hence, it is considered that the elemental diffusion between the solid electrolyte and the lithium composite oxide is suppressed and the reduction of the Li ionic conduction due to the deterioration of the solid electrolyte is alleviated, whereby the discharge capacity and the cycle characteristic are more effectively improved.

The "interfacial length per 1 $\mu$m$^2$ of unit cross-sectional area" herein is a total length of all the interfaces between pores and the active material contained in the unit cross-sectional area of a sintered plate, per 1 $\mu$m$^2$ of unit cross-sectional area of the sintered plate. The interfacial length can be measured by image analysis of a cross-sectional SEM image of the sintered plate. For example, The interfacial length per 1 $\mu$m$^2$ of unit cross-sectional area may be determined by analyzing the SEM image acquired in the above-mentioned porosity measurement, dividing parts of an electrode active material from parts filled with a resin (parts which were pores originally) in a sintered plate; determining the perimeter of all regions (that is, the total length of interfaces between the parts of a positive electrode active material and the parts filled with a resin) and the area of all regions analyzed (that is, regions composed of both of the parts of a positive electrode active material and the parts filled with a resin) in regions of the parts filled with a resin; and then dividing the perimeter by the area of all the analyzed regions to obtain the quotient as the interfacial length per 1 $\mu$m$^2$ of unit cross-sectional area. If the measurement can be carried out in a desired accuracy, the interfacial length may also be measured without embedding the sintered plate in the resin. For example, the measurement of the interfacial length of a sintered plate filled with a solid electrolyte in pores (a positive electrode plate taken out from an all-solid-state secondary battery) can be made in the state that the solid electrolyte remains filled.

The thickness of the positive electrode is, without regard to the form (sintered plate or mixture) of the positive electrode, from the viewpoint of the improvement in the energy density of a battery, and the like, preferably 30 to 300 $\mu$m, more preferably 50 to 300 $\mu$m and still more preferably 80 to 300 $\mu$m.

Method for producing the lithium composite oxide sintered plate

The lithium composite oxide sintered plate according to a preferable aspect of the present invention may be one produced by any method, but is produced preferably through (a) preparation of an NCM raw material powder, (b) preparation of an NCM green sheet, and (c) firing of the NCM green sheet.

(a) Preparation of an NCM raw material powder

First, an NCM raw material powder is prepared. A preferable NCM raw material powder is a $Li(Ni_{0.5}Co_{0.2}Mn_{0.3})O_2$ powder or a $Li(Ni_{0.3}Co_{0.6}Mn_{0.1})O_2$ powder. The $Li(Ni_{0.5}Co_{0.2}Mn_{0.3})O_2$ powder can be prepared by mixing a $(Ni_{0.5}Co_{0.2}Mn_{0.3})(OH)_2$ powder and a $Li_2CO_3$ powder weighed to give a molar ratio of Li/(Ni+Co+Mn) being 1.00 to 1.30, and firing the mixture at 700 to 1,200°C (preferably 750 to 1,000°C) for 1 to 24 hours (preferably 2 to 15 hours). Then, the $Li(Ni_{0.3}Co_{0.6}Mn_{0.1})O_2$ powder can be prepared by mixing a $(Ni_{0.3}Co_{0.6}Mn_{0.1})(OH)_2$ powder and a $Li_2CO_3$ powder weighed to give a molar ratio of Li/(Ni+Co+Mn) being 1.00 to 1.30, and firing the mixture at 700 to 1,200°C (preferably 750 to 1,000°C) for 1 to 24 hours (preferably 2 to 15 hours).

In order to control the peculiar microstructure (particularly, pores) in the lithium composite oxide sintered plate of the present aspect, it is preferable to use a mixed powder made by preparing a rather large-particle NCM raw material powder having a volume base D50 particle size of 3 to 20 $\mu$m (preferably 5 to 15 $\mu$m) and a rather small-particle NCM raw material powder having a volume base D50 particle size of 0.05 to 1 $\mu$m (preferably 0.1 to 0.6 $\mu$m), and mixing these. The proportion of the rather large-particle NCM raw material powder in the mixed powder of these large and small two kinds is preferably 50 to 99% by weight and more preferably 70 to 95% by weight. The rather small-particle NCM raw material powder may be prepared by milling the rather large-particle NCM raw material powder by well-known means such as a ball mill.

The additives such as $Li_3BO_3$, $Li_3PO_4$ and $Li_2SO_4$ may be added to the NCM raw material powder after being fired, prepared as described above, or may be added to an NCM precursor powder before being fired, such as a $(Ni_{0.5}Co_{0.2}Mn_{0.3})(OH)_2$ powder or a $(Ni_{0.3}Co_{0.6}Mn_{0.1})(OH)_2$ powder. Alternatively, when the mixed powder of the large and small two kinds as described above is obtained, the additives may be added to at least one of the rather large-particle NCM raw material powder and the rather small-particle NCM raw material powder.

(b) Preparation of an NCM green sheet

An NCM raw material powder (preferably, the above-mentioned NCM mixed powder), a solvent, a binder, a plasticizer and a dispersant are mixed to make a paste. The resulting paste is regulated in viscosity and then shaped into a sheet form to prepare an NCM green sheet.

(c) Preparation of an NCM sintered plate

The NCM green sheet thus prepared is cut out into a desired size and shape, and placed in a firing sagger and fired. It is desirable that the firing is carried out by raising the temperature to 800 to 1,000°C (preferably 850 to 970°C) at a temperature-rise rate of 50 to 600°C/h (preferably 100 to 300°C/h) and holding the temperature for 1 to 24 hours (preferably 2 to 12 hours). The lithium composite oxide sintered plate (NCM sintered plate) is thus obtained.

Lithium ion secondary battery

The positive electrode active material according to the present invention is used for a lithium ion secondary battery (typically, an all-solid-state battery). Therefore, according to a preferable aspect of the present invention, there is provided a lithium ion secondary battery having a positive electrode layer containing the positive electrode active material of the present invention, a negative electrode layer, and a $LiOH \cdot Li_2SO_4$-based solid electrolyte. The negative electrode layer contains a negative electrode active material. The $LiOH \cdot Li_2SO_4$-based solid electrolyte is interposed between the positive electrode layer and the negative electrode layer. As described above, the lithium ion secondary battery using, for the positive electrode, the lithium composite oxide having $Li_3BO_3$, $Li_3PO_4$ and/or $Li_2SO_4$ added thereto can exhibit a higher cycle retention rate than conventional lithium ion secondary batteries using, for the positive electrode, a lithium composite oxide with no additive.

The positive electrode layer is preferably in a form of a sintered plate made by sintering a positive electrode raw material powder. That is, the positive electrode active material is preferably in a form of a sintered plate. Since the sintered plate does not have to contain an electron conductive auxiliary or a binder, the energy density of the positive electrode layer can be increased. The sintered plate may be a compact body or a porous body, and a solid electrolyte may be contained in pores of the porous body. It can be said that the positive electrode layer may be in a form generally called a mixture electrode, for example, a mixture of the positive electrode active material, an electron conductive auxiliary, a lithium ionic conductive material, a binder and the like, or a form (mixture form) made by shaping a mixture of the positive electrode active material, a $LiOH \cdot Li_2SO_4$-based solid electrolyte, an electron conductive auxiliary and the like. That is, the positive electrode layer may contain particles of the positive electrode active material, particles of the $LiOH \cdot Li2SO_4$-based solid electrolyte and the electron conductive auxiliary in a mixture form. The compactness (filling rate) of the positive electrode active material in the positive electrode in a mixture form is, regarding the form of the positive electrode, preferably 50 to 80% by volume, more preferably 55 to 80% by volume, still more preferably 60 to 80% by volume and especially preferably 65 to 75% by volume. When the compactness is in such a range, voids in the positive electrode active material can fully be filled with the solid electrolyte, and the proportion of the positive electrode active material in the positive electrode increases, leading to achievement of a high energy density as a battery. Here, the value of the compactness (filling rate) in this mixture form is equivalent to a value obtained by subtracting the proportion of portions (including pores) excluding the positive electrode active material from 100.

The negative electrode layer (typically, negative electrode plate) contains a negative electrode active material. As the negative electrode active material, a negative electrode active material usually used for lithium ion secondary batteries can be used. Examples of such usual negative electrode active materials include carbon-based materials and metals or semimetals such as Li, In, Al, Sn, Sb, Bi and Si, or alloys containing any thereof. Besides, oxide-based negative electrode active materials may be used.

An especially preferable negative electrode active material contains a material capable of intercalating/deintercalating lithium ions at 0.4 V (vs. $Li/Li^+$) or higher, and preferably contains Ti. A negative electrode active material meeting such a condition is preferably an oxide containing at least Ti. Preferable examples of such a negative electrode active material include lithium titanate $Li_4Ti_5O_{12}$ (hereinafter, referred to as LTO in some cases), a niobium titanium composite oxide $Nb_2TiO_7$ and titanium oxide $TiO_2$; more preferable are LTO and $Nb_2TiO_7$; and still more preferable is LTO. Here, LTO is known typically as having a spinel structure, but can assume another structure in charge/discharge. For example, with regard to LTO, the reactions in charge/discharge progress in the coexistence of two phases of $Li_4Ti_5O_{12}$ (spinel structure) and $Li_7Ti_5O_{12}$ (rock salt structure). Therefore, LTO is not limited to having a spinel structure.

The negative electrode may be in a form generally called a mixture electrode, for example, a mixture of the negative electrode active material, an electron conductive auxiliary, a lithium ion conductive material, a binder and the like, or a form made by shaping a mixture of the negative electrode active material, a $LiOH \cdot Li_2SO_4$-based solid electrolyte, an electron conductive auxiliary and the like. That is, the negative electrode may contain particles of the negative electrode active material, particles of a $LiOH \cdot Li_2SO_4$-based solid electrolyte, and an electron conductive auxiliary in a mixture form. The negative electrode, however, is preferably in a form of a sintered plate made by sintering a negative electrode raw material powder. That is, the negative electrode or the negative electrode active material is preferably in a form of a sintered plate. Since the sintered plate does not have to contain an electron conductive auxiliary or a binder, the energy density of the negative electrode can be increased. The sintered plate may be a compact body or a porous body, and a solid electrolyte may be contained in pores of the porous body. The particle size of particles of the negative electrode active material in a mixture form is preferably 0.05 to 50 $\mu$m, more preferably 0.1 to 30 $\mu$m and still more preferably 0.5 to 20 $\mu$m. The particle size of particles of the $LiOH \cdot Li_2SO_4$-based solid electrolyte is preferably 0.01 to 50 $\mu$m, more preferably 0.05 to 30 $\mu$m and still more preferably 0.1 to 20 $\mu$m. The electron conductive auxiliary is not especially limited as long as being one generally used for electrodes, but is preferably a carbon material. Preferable examples of the carbon material include carbon black, graphite, carbon nanotube, graphene, reduced graphene oxide, and any combinations thereof, but are not limited thereto, and various other carbon materials can be used.

The compactness (filling rate) of the negative electrode active material in the negative electrode is, without regard to the form (sintered plate or mixture) of the negative electrode, preferably 55 to 80% by volume, more preferably 60 to 80% by volume and still more preferably 65 to 75% by volume. When the compactness is in such a range, voids in the negative electrode active material can fully be filled with the solid electrolyte and the proportion of the negative electrode active material in the negative electrode increases, leading to achievement of a high energy density as a battery. Here, the value of the compactness (filling rate) in this mixture form is equivalent to a value obtained by subtracting the proportion of portions (including pores) excluding the negative electrode active material from 100.

The thickness of the negative electrode is, without regard to the form (sintered plate or mixture) of the negative electrode, from the viewpoint of the improvement in the energy density of a battery, and the like, preferably 40 to 410 $\mu$m, more preferably 65 to 410 $\mu$m, still more preferably 100 to 410 $\mu$m and especially preferably 107 to 270 $\mu$m.

The solid electrolyte is a LiOH. $Li_2SO_4$-based solid electrolyte. The $LiOH \cdot Li_2SO_4$-based solid electrolyte is a composite compound of LiOH and $Li_2SO_4$; the typical composition is represented by the general formula: $xLiOH \cdot yLi_2SO_4$ wherein $x + y = 1$, and $0.6 \leq x \leq 0.95$; and representative examples include $3LiOH \cdot Li_2SO_4$ (a composition in which in the above general formula, $x = 0.75$ and $y = 0.25$). Preferably, the $LiOH \cdot Li_2SO_4$-based solid electrolyte contains a solid electrolyte identified as $3LiOH \cdot Li_2SO_4$ by X-ray diffraction. This preferable solid electrolyte contains $3LiOH \cdot Li_2SO_4$ as its main phase. Whether or not $3LiOH \cdot Li_2SO_4$ is contained in the solid electrolyte can be confirmed by identification using 032-0598 in ICDD data base in an X-ray diffraction pattern. Here, "$3LiOH \cdot Li_2SO_4$" refers to one having a crystal structure which can be regarded as the same as that of $3LiOH \cdot Li_2SO_4$, and does not necessarily need to have the same crystal composition as $3LiOH \cdot Li_2SO_4$. That is, $3LiOH \cdot Li_2SO_4$ whose composition deviates from $LiOH : Li_2SO_4 = 3 : 1$ is, as long as having the same crystal structure as $3LiOH \cdot Li_2SO_4$, determined to be also included in the "$3LiOH \cdot Li_2SO_4$". Therefore, even a solid electrolyte (for example, $3LiOH \cdot Li_2SO_4$ in which boron is dissolved as a solid solution and which exhibits an X-ray diffraction peak shifted to the larger angle side) containing a dopant such as boron is, as long as being regarded as having the same crystal structure as $3LiOH \cdot Li_2SO_4$, herein determined to be referred to as $3LiOH \cdot Li_2SO_4$. Similarly, the solid electrolyte to be used in the present invention is allowed to contain inevitable impurities.

Therefore, the $LiOH \cdot Li_2SO_4$-based solid electrolyte may contain, other than $3LiOH \cdot Li_2SO_4$ as its main phase, heterophases. The heterophases may be ones containing a plurality of elements selected from Li, O, H, S and B, or may be ones consisting only of a plurality of elements selected from Li, O, H, S and B. Examples of the heterophases include $LiOH$, $Li_2SO_4$ and/or $Li_3BO_3$, originated from raw materials. These heterophases are conceivably unreacted raw materials remaining when $3LiOH \cdot Li_2SO_4$ is formed, but since the heterophases do not contribute to the lithium ionic conduction, it is desirable that the amount thereof other than $Li_3BO_3$ is small. Since it can be said that a heterophase containing boron like $Li_3BO_3$ can contribute to the improvement in the lithium ionic conductivity after high-temperature long-time holding, the heterophase is allowed to be contained in a desired amount. It can be said that the solid electrolyte may be composed of a single phase of $3LiOH \cdot Li_2SO_4$ in which boron is dissolved as a solid solution.

It is preferable that the $LiOH \cdot Li_2SO_4$-based solid electrolyte (particularly, $3LiOH \cdot Li_2SO_4$) further contains boron. By making boron to be further contained in a solid electrolyte identified as $3LiOH \cdot Li_2SO_4$, the reduction of the lithium ionic conductivity can be significantly suppressed even after high-temperature long-time holding. It is presumed that boron is entrapped in any of sites of the crystal structure of $3LiOH \cdot Li_2SO_4$, and improves stability of the crystal structure to temperature. The molar ratio (B/S) of boron B to sulfur S contained in the solid electrolyte is preferably higher than 0.002 and lower than 1.0, more preferably 0.003 or higher and 0.9 or lower and still more preferably 0.005 or higher and 0.8 or lower. When the B/S is in the above range, the retention rate of the lithium ionic conductivity is enabled to be improved. Further when the B/S is in the above range, the content of unreacted heterophases containing boron decreases, and therefore the absolute value of the lithium ionic conductivity can be high.

The $LiOH \cdot Li_2SO_4$-based solid electrolyte may be a green compact made of a powder made by milling a melt-solidified body, but is preferably a melt-solidified body (that is, material heat melted and then solidified). A method of milling the melt-solidified body is not especially limited, but there can be adopted a usual method using a mortar, a ball mill, a jet mill, a roller mill, a cutter mill, a ring mill or the like, and the method may be of a wet type or dry type.

It is preferable that the $LiOH \cdot Li_2SO_4$-based solid electrolyte is filled also in pores of the positive electrode layer and/or pores of the negative electrode layer, or is incorporated (as one component of the mixture) also in the positive electrode layer and/or the negative electrode layer. The thickness (excluding portions of the solid electrolyte having entered pores of the positive electrode layer and the negative electrode layer) of the solid electrolyte layer is, from the viewpoint of the charge/discharge rate characteristic and the insulation of the solid electrolyte, preferably 1 to 500 $\mu$m, more preferably 3 to 50 $\mu$m and still more preferably 5 to 40 $\mu$m.

Production of a lithium ion secondary battery

Production of a lithium ion secondary battery, in the case of using a sintered plate electrode, can be carried out by i) preparing a positive electrode (as required, having a current collector formed therein) and a negative electrode (as required, having a current collector formed therein), and ii) sandwiching a solid electrolyte between the positive electrode and the negative electrode and subjecting the resultant to pressing, heating or the like to unify the positive electrode, the solid electrolyte and the negative electrode. The positive electrode, the solid electrolyte and the negative electrode may be connected by another means. In this case, examples of means to form the solid electrolyte between the positive electrode and the negative electrode include means of placing a formed body or a powder of the solid electrolyte on one electrode, means of applying a paste of a solid electrolyte powder on the electrode by screen printing, means of collision solidifying a powder of the solid electrolyte on the electrode as a substrate by an aerosol deposition method or the like, and means of depositing a solid electrolyte powder on the electrode by electrophoresis to form a membrane. On the other hand, production of an all-solid-state secondary battery in the case of using a mixture electrode can be carried out, for example, by placing and pressing, in a press die, a positive electrode mixture powder (containing positive electrode active material particles, solid electrolyte particles and an electron conductive auxiliary), a solid electrolyte powder and a negative electrode mixture powder (containing negative electrode active material particles, solid electrolyte particles and an electron conductive auxiliary). The charging and pressing of the various powders in this case is allowed to be carried out in an arbitrary order so that a positive electrode layer, a solid electrolyte layer and a negative electrode layer are finally made in order. Here, as described above, the positive electrode active material particles may be in a form of a mixed powder containing a powder of the lithium composite oxide and at least one powder selected from $Li_3BO_3$, $Li_3PO_4$ and $Li_2SO_4$.

EXAMPLES

The present invention will be described more specifically by way of the following Examples. In the following description, lithium composite oxides having a layered rock salt structure containing Li, Ni, Co and Mn, such as $Li(Ni_{0.5}Co_{0.2}Mn_{0.3})O_2$ and $Li(Ni_{0.3}Co_{0.6}Mn_{0.1})O_2$, are abbreviated to "NCM", while $Li_4Ti_5O_{12}$ is abbreviated to "LTO".

<Examples 1 to 18>

Examples described below were Examples in respect to all-solid-state secondary batteries whose positive electrodes and negative electrodes were in forms of sintered plates.
First, NCM raw material powders 1 to 22 were prepared in order to prepare positive electrode plates as described below. Then, the summary of features of these raw material powders is shown in Tables 1A to 1C.

[Preparation of an NCM raw material powder 1]

A commercially available $(Ni_{0.5}Co_{0.2}Mn_{0.3})(OH)_2$ powder (mean particle size: 9 to 10 $\mu$m) and a commercially available $Li_2CO_3$ powder (mean particle size: 3 $\mu$m), which were weighed to give a molar ratio of Li/(Ni+Co+Mn) being 1.15, were mixed, and then held at 750°C for 10 hours to obtain an NCM raw material powder 1. The volume base D50 particle size of the powder was 8 $\mu$m.

[Preparation of an NCM raw material powder 2]

2.45% by weight (with respect to the total amount of the NCM raw material powder 1 and $Li_3BO_3$) of $Li_3BO_3$ was added to the NCM raw material powder 1, and regulated in the volume base D50 particle size to about 0.4 $\mu$m by wet milling in a ball mill, and then dried to obtain an NCM raw material powder 2.

[Preparation of an NCM raw material powder 3]

9.2% by weight (with respect to the total amount of the NCM raw material powder 1 and $Li_3BO_3$) of $Li_3BO_3$ was added to the NCM raw material powder 1, and regulated in the volume base D50 particle size to about 0.4 $\mu$m by wet milling in a ball mill, and then dried to obtain an NCM raw material powder 3.

[Preparation of an NCM raw material powder 4]

The NCM raw material powder 1 was regulated in the volume base D50 particle size to about 5.5 $\mu$m by wet milling in a ball mill, and then dried to obtain an NCM raw material powder 4.

[Preparation of an NCM raw material powder 5]

1.0% by weight (with respect to the total amount of the NCM raw material powder 1 and $Li_3PO_4$) of $Li_3PO_4$ was added to the NCM raw material powder 1, and regulated in the volume base D50 particle size to about 5.5 $\mu$m by wet milling in a ball mill, and then dried to obtain an NCM raw material powder 5.

[Preparation of an NCM raw material powder 6]

5.0% by weight (with respect to the total amount of the NCM raw material powder 1 and $Li_3PO_4$) of $Li_3PO_4$ was added to the NCM raw material powder 1, and regulated in the volume base D50 particle size to about 5.5 $\mu$m by wet milling in a ball mill, and then dried to obtain an NCM raw material powder 6.

[Preparation of an NCM raw material powder 7]

A commercially available $(Ni_{0.3}Co_{0.6}Mn_{0.1})(OH)_2$ powder (mean particle size: 7 to 8 $\mu$m) and a commercially available $Li_2CO_3$ powder (mean particle size: 3 $\mu$m), which were weighed to give a molar ratio of Li/(Ni+Co+Mn) being 1.15, were mixed, and then held at 850°C for 10 hours to obtain an NCM raw material powder 7. The volume base D50 particle size of the powder was 6.5 $\mu$m.

[Preparation of an NCM raw material powder 8]

9.2% by weight (with respect to the total amount of the NCM raw material powder 7 and $Li_3BO_3$) of $Li_3BO_3$ was added to the NCM raw material powder 7, and regulated in the volume base D50 particle size to about 0.4 $\mu$m by wet milling in a ball mill, and then dried to obtain an NCM raw material powder 8.

[Preparation of an NCM raw material powder 9]

16.8% by weight (with respect to the total amount of the NCM raw material powder 7 and $Li_3BO_3$) of $Li_3BO_3$ was added to the NCM raw material powder 7, and regulated in the volume base D50 particle size to about 0.4 $\mu$m by wet milling in a ball mill, and then dried to obtain an NCM raw material powder 9.

[Preparation of an NCM raw material powder 10]

51% by weight (with respect to the total amount of the NCM raw material powder 7 and $Li_3BO_3$) of $Li_3BO_3$ was added to the NCM raw material powder 7, and regulated in the volume base D50 particle size to about 0.4 $\mu$m by wet milling in a ball mill, and then dried to obtain an NCM raw material powder 10.

[Preparation of an NCM raw material powder 11]

16.8% by weight (with respect to the total amount of the NCM raw material powder 7 and $Li_2SO_4$) of $Li_2SO_4$ was added to the NCM raw material powder 7, and regulated in the volume base D50 particle size to about 0.4 $\mu$m by wet milling in a ball mill, and then dried to obtain an NCM raw material powder 11.

[Preparation of an NCM raw material powder 12]

51% by weight (with respect to the total amount of the NCM raw material powder 7 and $Li_2SO_4$) of $Li_2SO_4$ was added to the NCM raw material powder 7, and regulated in the volume base D50 particle size to about 0.4 $\mu$m by wet milling in a ball mill, and then dried to obtain an NCM raw material powder 12.

[Preparation of an NCM raw material powder 13]

The NCM raw material powder 7 was regulated in the volume base D50 particle size to about 0.4 $\mu$m by wet milling in a ball mill, and then dried to obtain an NCM raw material powder 13.

[Preparation of an NCM raw material powder 14]

The NCM raw material powder 7 was regulated in the volume base D50 particle size to about 4.3 $\mu$m by wet milling in a ball mill, and then dried to obtain an NCM raw material powder 14.

[Preparation of an NCM raw material powder 15]

A commercially available $(Ni_{0.3}Co_{0.6}Mn_{0.1})(OH)_2$ powder (mean particle size: 7 to 8 $\mu$m) and a commercially available $Li_2CO_3$ powder (mean particle size: 3 $\mu$m), which were weighed to give a molar ratio of Li/(Ni+Co+Mn) being 1.15, were mixed, and then held at 950°C for 10 hours; and the resulting powder was regulated in the volume base D50 particle size to about 1.9 $\mu$m by wet milling in a ball mill, and then dried to obtain an NCM raw material powder 15.

[Preparation of an NCM raw material powder 16]

0.74% by weight (with respect to the total amount of the NCM hydroxide, $Li_2CO_3$ and $Li_3PO_4$) of a $Li_3PO_4$ powder (mean particle size: 0.5 $\mu$m) was added to a commercially available $(Ni_{0.3}Co_{0.6}Mn_{0.1})(OH)_2$ powder (mean particle size: 9 to 10 $\mu$m) and a commercially available $Li_2CO_3$ powder (mean particle size: 3 $\mu$m), which were weighed to give a molar ratio of Li/(Ni+Co+Mn) being 1.15, and mixed, and then held at 870°C for 10 hours to obtain an NCM raw material powder 16. The volume base D50 particle size of the powder was 7.4 $\mu$m.

[Preparation of an NCM raw material powder 17]

1.8% by weight (with respect to the total amount of the NCM hydroxide, $Li_2CO_3$ and $Li_3PO_4$) of a $Li_3PO_4$ powder

(mean particle size: 0.5 $\mu$m) was added to a commercially available $(Ni_{0.3}Co_{0.6}Mn_{0.1})(OH)_2$ powder (mean particle size: 9 to 10 $\mu$m) and a commercially available $Li_2CO_3$ powder (mean particle size: 3 $\mu$m), which were weighed to give a molar ratio of Li/(Ni+Co+Mn) being 1.15, and mixed, and then held at 870°C for 10 hours to obtain an NCM raw material powder 17. The volume base D50 particle size of the powder was 7.5 $\mu$m.

[Preparation of an NCM raw material powder 18]

3.6% by weight (with respect to the total amount of the NCM hydroxide, $Li_2CO_3$ and $Li_3PO_4$) of a $Li_3PO_4$ powder (mean particle size: 0.5 $\mu$m) was added to a commercially available $(Ni_{0.3}Co_{0.6}Mn_{0.1})(OH)_2$ powder (mean particle size: 9 to 10 $\mu$m) and a commercially available $Li_2CO_3$ powder (mean particle size: 3 $\mu$m), which were weighed to give a molar ratio of Li/(Ni+Co+Mn) being 1.15, and mixed, and then held at 870°C for 10 hours to obtain an NCM raw material powder 18. The volume base D50 particle size of the powder was 7.7 $\mu$m.

[Preparation of an NCM raw material powder 19]

A commercially available $(Ni_{0.3}Co_{0.6}Mn_{0.1})(OH)_2$ powder (mean particle size: 9 to 10 $\mu$m) and a commercially available $Li_2CO_3$ powder (mean particle size: 3 $\mu$m), which were weighed to give a molar ratio of Li/(Ni+Co+Mn) being 1.15, were mixed, and then held at 750°C for 10 hours to obtain an NCM raw material powder 19. The volume base D50 particle size of the powder was 7.0 $\mu$m.

[Preparation of an NCM raw material powder 20]

9.2% by weight (with respect to the total amount of the NCM raw material powder 19 and $Li_3BO_3$) of $Li_3BO_3$ and 1.0% by weight (with respect to the total amount of the NCM raw material powder 19 and $Li_3PO_4$) of $Li_3PO_4$ were added to the NCM raw material powder 19, and regulated in the volume base D50 particle size to about 0.5 $\mu$m by wet milling in a ball mill, and then dried to obtain an NCM raw material powder 20.

[Preparation of an NCM raw material powder 21]

9.2% by weight (with respect to the total amount of the NCM raw material powder 19 and $Li_3BO_3$) of $Li_3BO_3$ and 2.5% by weight (with respect to the total amount of the NCM raw material powder 19 and $Li_3PO_4$) of $Li_3PO_4$ were added to the NCM raw material powder 19, and regulated in the volume base D50 particle size to about 0.5 $\mu$m by wet milling in a ball mill, and then dried to obtain an NCM raw material powder 21.

[Preparation of an NCM raw material powder 22]

9.2% by weight (with respect to the total amount of the NCM raw material powder 19 and $Li_3BO_3$) of $Li_3BO_3$ and 5.0% by weight (with respect to the total amount of the NCM raw material powder 19 and $Li_3PO_4$) of $Li_3PO_4$ were added to the NCM raw material powder 19, and regulated in the volume base D50 particle size to about 0.5 $\mu$m by wet milling in a ball mill, and then dried to obtain an NCM raw material powder 22.
By using the above raw material powders 1 to 22, positive electrode plates and batteries were prepared as described below, and various evaluations were carried out.

Example 1

(1) Preparation of a positive electrode plate

(1a) Preparation of an NCM green sheet

First, the NCM raw material powders 1 and 2 were homogeneously mixed in a blend proportion of 80 : 20 (in weight ratio) as indicated in Tables 1A to 1C to prepare an NCM mixed powder A. The mixed powder A was mixed with a solvent for forming a tape, a binder, a plasticizer and a dispersant. The viscosity of the resulting paste was regulated, followed by shaping into a sheet form on a PET film (polyethylene terephthalate) to prepare an NCM green sheet. The thickness of the NCM green sheet was regulated such that the thickness after firing is 100 $\mu$m.

(1b) Preparation of an NCM sintered plate

The NCM green sheet peeled off from the PET film was punched out into a circle of 11 mm in diameter with a punch, and placed in a firing sagger. The temperature was raised at a temperature-rise rate of 200°C/h up to 940°C and held for 10 hours to carry out firing. The thickness of the resulting sintered plate was about 100 $\mu$m by SEM observation. A Au film (thickness: 100 nm) was formed as a current collector layer on one surface of the NCM sintered plate by sputtering. A positive electrode plate was thus obtained.

(2) Preparation of a negative electrode plate

(2a) Preparation of an LTO green sheet

A commercially available $TiO_2$ powder (mean particle size: 1 $\mu$m or smaller) and a commercially available $Li_2CO_3$ powder (mean particle size: 3 $\mu$m), which were weighed to give a molar ratio of Li/Ti being 0.84, were mixed, and then held at 1,000°C for 2 hours to obtain a powder composed of LTO particles. The powder was regulated in the mean particle size to about 2 $\mu$m by wet milling in a ball mill, and mixed with a solvent for forming a tape, a binder, a plasticizer and a dispersant. The viscosity of the resulting paste was regulated followed by shaping into a sheet form on a PET film to prepare an LTO green sheet. The thickness of the LTO green sheet was regulated such that the thickness after firing is 130 $\mu$m.

(2b) Preparation of an LTO sintered plate

The LTO green sheet peeled off from the PET film was punched out into a circle of 11 mm in diameter with a punch, and placed in a firing sagger. The temperature was raised at a temperature-rise rate of 200°C/h up to 850°C and held for 2 hours to carry out firing. The thickness of the resulting sintered plate was about 130 $\mu$m by SEM observation. A Au film (thickness: 100 nm) was formed as a current collector layer on one surface of the LTO sintered plate by sputtering. A negative electrode plate was thus obtained.

(3) Preparation of a solid electrolyte

(3a) Preparation of a raw material mixed powder

A $Li_2SO_4$ powder (commercially available product, purity: 99% or higher), a LiOH powder (commercially available product, purity: 98% or higher) and $Li_3BO_3$ (commercially available product, purity: 99% or higher) were mixed so that $Li_2SO_4$ : LiOH : $Li_3BO_3$ = 1 : 2.6 : 0.05 (in molar ratio) to obtain a raw material mixed powder. These powders were handled in a glove box in an Ar atmosphere and enough caution was taken so as not to cause deterioration such as moisture absorption.

(3b) Melting synthesis

The raw material mixed powder was placed in an Ar atmosphere in a high-purity alumina-made crucible. The crucible was set in an electric furnace, and heat treated at 430°C for 2 hours in an Ar atmosphere to prepare a melt. Successively, the melt was cooled at 100°C/h in the electric furnace to form a solidified material.

(3c) Milling in a mortar

The resulting solidified material was milled in a mortar in a glove box in an Ar atmosphere to obtain a solid electrolyte powder having a volume base D50 particle size of 5 to 50 $\mu$m.

(4) Preparation of an all-solid-state battery

The solid electrolyte powder was placed on the positive electrode plate, and the negative electrode plate was placed thereon. A weight was further placed on the negative electrode plate, and heated at 400°C for 45 min in an electric furnace. At this time, the solid electrolyte powder was melted and underwent subsequent solidification to form a solid electrolyte layer between the electrode plates. By using a cell composed of the resulting positive electrode plate/solid electrolyte/negative electrode plate, a battery was prepared.

(5) Evaluations

(5a) Degree of orientation

On the positive electrode plate prepared in the above (1), XRD (X-ray diffraction) measurement was carried out. The measurement was carried out by using an XRD device (manufactured by Bruker Corp., D8 ADVANCE) and measuring an XRD profile when the plate plane of the positive electrode plate was irradiated with X-ray. From the XRD profile, $I_{[003]}/I_{[104]}$ that is a ratio of the diffraction intensity (peak height) $I_{[003]}$ derived from the (003) plane of NCM to the diffraction intensity (peak height) $I_{[104]}$ derived from the (104) plane thereof was calculated, which was defined as the degree of orientation.

(5b) Measurements of the thickness and the porosity

Measurements of the thickness and the porosity (% by volume) of each of the positive electrode plate prepared in the above (1) (the NCM sintered plate in the state of not containing the solid electrolyte) and the negative electrode plate prepared in the above (2) (the LTO sintered plate in the state of not containing the solid electrolyte) were carried out as follows. First, the positive electrode plate (or the negative electrode plate) was embedded in a resin and then subjected to cross-sectional polishing by ion milling. The polished cross-section was observed by SEM to acquire a cross-sectional SEM image. The thickness was calculated from the SEM image. SEM images for porosity measurement were taken as images in magnifications of 1,000 times and 500 times. The acquired images were subjected to a binarization process using image analysis software (manufactured by Media Cybernetics, Inc., Image-Pro premier) to calculate the proportion (%) of the area of parts filled with the resin in the total area of parts of the positive electrode active material (or the negative electrode active material) and the parts filled with the resin in the positive electrode plate (or the negative electrode plate) (parts which had been pores originally) as the porosity (%) of the positive electrode plate (or the negative electrode plate). The threshold in the binarization was set by using the Otsu's binarization as a discriminant analysis method. The porosity of the positive electrode plate was as indicated in Table 2, and the porosity of the negative electrode plate was 38% (that is, the compactness was 62%).

(5c) Measurement of the mean pore diameter

By using the SEM image used in the above porosity measurement, the mean pore diameter was measured as follows. By using image analysis software (manufactured by Media Cybernetics, Inc., Image-Pro premier), a binarization process was carried out to divide parts of the positive electrode active material (or the negative electrode active material) from parts filled with a resin (parts which had been pores originally) in the positive electrode plate (or the negative electrode plate). Thereafter, the maximum Martin diameter in each region in regions of the parts filled with a resin was determined and the mean value thereof was defined as the mean pore diameter ($\mu$m) of the positive electrode plate (or the negative electrode plate). The mean pore diameter of the positive electrode plate was as indicated in Table 2; and the mean pore diameter of the negative electrode plate was 2.1 $\mu$m.

(5d) Measurement of the interfacial length per 1 $\mu$m$^2$ of unit cross-sectional area

By using the SEM image used in the above porosity measurement, the interfacial length per 1 $\mu$m$^2$ of unit cross-sectional area was measured as follows. By using image analysis software (manufactured by Media Cybernetics, Inc., Image-Pro Premier), a binarization process was carried out to divide parts of the positive electrode active material from parts filled with a resin (parts which had been pores originally) in the positive electrode plate and then determine the perimeter of all regions (that is, the total length of the interfaces between the parts of the positive electrode active material and the parts filled with a resin) in regions of the parts filled with a resin, and the area of all analyzed regions (that is, regions composed of both of the parts of the positive electrode active material and the parts filled with a resin). The perimeter was divided by the area of the whole analyzed region to obtain a quotient as the interfacial length ($\mu$m) per 1 $\mu$m$^2$ of unit cross-sectional area. The result is shown in Table 2.

(5e) Measurement of the molar ratio of metal elements in the positive electrode plate

The molar ratio Li/(Ni+Co+Mn) of the Li content in the positive electrode plate prepared in the above (1) to the total content of Ni, Co and Mn was calculated from the measurement result of metal element analysis by inductively coupled plasma atomic emission spectrometry (ICP-AES method). The result is shown in Table 2.

(5f) Identification of the solid electrolyte by XRD

The LiOH·Li$_2$SO$_4$-based solid electrolyte obtained in the above (3c) was analyzed by X-ray diffraction (XRD), and was identified as 3LiOH·Li$_2$SO$_4$.

(5g) Evaluation of the charge/discharge (cycle retention rate)

For the battery prepared in the above (4), the discharge capacity of the battery at an operating temperature of 150°C was measured in the voltage range of 2.5 V to 1.5 V. The measurement was carried out by carrying out constant current/constant voltage charging until the battery voltage reached the upper limit of the above voltage range and carrying out discharging until the battery voltage reached the lower limit thereof. This test was repeated (cycle test), and the retention rate of the discharge capacity in predetermined cycles (= 100 × (a discharge capacity in the predetermined cycles) / (a first-cycle discharge capacity)) was calculated. The result is shown in Table 2.

Example 2

A positive electrode plate and a battery were prepared and various evaluations were carried out, as in Example 1, except for 1) using an NCM mixed powder B containing the NCM raw material powders 1 and 3 in a blend proportion (in weight ratio) of 90 : 10 indicated in Tables 1A to 1C in place of the mixed powder A in the preparation of the positive electrode plate of the above (1), and 2) altering the firing temperature therein to 950°C.

Example 3

A positive electrode plate and a battery were prepared and various evaluations were carried out, as in Example 1, except for 1) using the NCM raw material powder 5 alone indicated in Table 1A to 1C in place of the mixed powder A, and 2) altering the firing temperature therein to 920°C, in the preparation of the positive electrode plate of the above (1). Further, the battery prepared in the present Example was disassembled in a glove box, and observation by an electron microscope and element mapping by an electron probe microanalyzer (EPMA) were carried out on an interface between the positive electrode plate and the solid electrolyte. Figure 1 shows an electron microscope photograph and EPMA mapping images of a positive electrode active material (NCM)/solid electrolyte cross-section of the all-solid-state battery prepared in present Example. In Figure 1, the image positioned on the leftmost side is an electron microscope photograph (white portions correspond to NCM, and black portions correspond to solid electrolyte), and rightward therefrom, EPMA mapping images of Mn, Co and Ni are shown in order.

Example 4

A positive electrode plate and a battery were prepared and various evaluations were carried out, as in Example 1, except for 1) using the NCM raw material powder 6 alone indicated in Table 1A to 1C in place of the mixed powder A, and 2) altering the firing temperature therein to 920°C, in the preparation of the positive electrode plate of the above (1).

Example 5

A positive electrode plate and a battery were prepared and various evaluations were carried out, as in Example 1, except for 1) using an NCM mixed powder C containing the NCM raw material powders 7 and 8 indicated in Table 1A to 1C in a blend proportion (in weight ratio) of 90 : 10 in place of the mixed powder A, and 2) altering the firing temperature therein to 920°C, in the preparation of the positive electrode plate of the above (1).

Example 6

A positive electrode plate and a battery were prepared and various evaluations were carried out, as in Example 1, except for 1) using an NCM mixed powder D containing the NCM raw material powders 7 and 8 in a blend proportion (in weight ratio) of 95 : 5 indicated in Tables 1A to 1C in place of the mixed powder A in the preparation of the positive electrode plate of the above (1), and 2) altering the firing temperature therein to 950°C.

Example 7

A positive electrode plate and a battery were prepared and various evaluations were carried out, as in Example 1, except for 1) using an NCM mixed powder E containing the NCM raw material powders 7 and 9 in a blend proportion (in weight ratio) of 95 : 5 indicated in Tables 1A to 1C in place of the mixed powder A in the preparation of the positive electrode plate of the above (1), and 2) altering the firing temperature therein to 920°C.

Example 8

A positive electrode plate and a battery were prepared and various evaluations were carried out, as in Example 1, except for 1) using an NCM mixed powder F containing the NCM raw material powders 7 and 10 in a blend proportion (in weight ratio) of 95 : 5 indicated in Tables 1A to 1C in place of the mixed powder A in the preparation of the positive electrode plate of the above (1), and 2) altering the firing temperature therein to 920°C. In addition, Figure 3 shows an electron microscope photograph (reflection electron image) of a cross-section of the positive electrode plate prepared in the present Example.

Example 9

A positive electrode plate and a battery were prepared and various evaluations were carried out, as in Example 1, except for 1) using an NCM mixed powder G containing the NCM raw material powders 7 and 11 indicated in Table 1A to 1C in a blend proportion (in weight ratio) of 95 : 5 in place of the mixed powder A, and 2) altering the firing temperature therein to 920°C, in the preparation of the positive electrode plate of the above (1).

Example 10

A positive electrode plate and a battery were prepared and various evaluations were carried out, as in Example 1, except for 1) using an NCM mixed powder H containing the NCM raw material powders 7 and 12 indicated in Table 1A to 1C in a blend proportion (in weight ratio) of 95 : 5 in place of the mixed powder A, and 2) altering the firing temperature therein to 920°C, in the preparation of the positive electrode plate of the above (1).

Example 11

A positive electrode plate and a battery were prepared and various evaluations were carried out, as in Example 1, except for 1) using an NCM mixed powder I containing the NCM raw material powders 16 and 20 in a blend proportion (in weight ratio) of 90 : 10 indicated in Tables 1A to 1C in place of the mixed powder A in the preparation of the positive electrode plate of the above (1), and 2) altering the firing temperature therein to 920°C.

Example 12

A positive electrode plate and a battery were prepared and various evaluations were carried out, as in Example 1, except for 1) using an NCM mixed powder J containing the NCM raw material powders 17 and 21 indicated in Table 1A to 1C in a blend proportion (in weight ratio) of 90 : 10 in place of the mixed powder A, and 2) altering the firing temperature therein to 920°C, in the preparation of the positive electrode plate of the above (1). In addition, Figure 4 shows an electron microscope photograph (reflection electron image) of a cross-section of the positive electrode plate prepared in the present Example after being embedded in a resin.

Example 13

A positive electrode plate and a battery were prepared and various evaluations were carried out, as in Example 1, except for 1) using an NCM mixed powder K containing the NCM raw material powders 18 and 22 indicated in Table 1A to 1C in a blend proportion (in weight ratio) of 90 : 10 in place of the mixed powder A, and 2) altering the firing temperature therein to 920°C, in the preparation of the positive electrode plate of the above (1).

Example 14 (Comparative)

A positive electrode plate and a battery were prepared and various evaluations were carried out, as in Example 1, except for 1) using the NCM raw material powder 4 in Tables 1A to 1C alone in place of the mixed powder A in the preparation of the positive electrode plate of the above (1), and 2) altering the firing temperature therein to 920°C. Further, the battery prepared in the present Example was disassembled in a glove box, and observation by an electron microscope and element mapping by an electron probe microanalyzer (EPMA) was carried out on an interface between the positive electrode plate and the solid electrolyte. Figure 2 shows an electron microscope photograph and EPMA mapping images of a positive electrode active material (NCM)/solid electrolyte cross-section of the all-solid-state battery prepared in present Example. In Figure 2, the image positioned on the leftmost side is an electron microscope photograph (white portions correspond to NCM, and black portions correspond to solid electrolyte), and rightward therefrom, EPMA mapping images of Mn, Co and Ni are shown in order.

Example 15 (Comparative)

A positive electrode plate and a battery were prepared and various evaluations were carried out, as in Example 1, except for 1) using the NCM raw material powder 14 alone indicated in Table 1A to 1C in place of the mixed powder A, and 2) altering the firing temperature therein to 920°C, in the preparation of the positive electrode plate of the above (1).

Example 16 (Comparative)

A positive electrode plate and a battery were prepared and various evaluations were carried out, as in Example 1, except for 1) using the NCM raw material powder 15 alone indicated in Table 1A to 1C in place of the mixed powder A, and 2) altering the firing temperature therein to 890°C, in the preparation of the positive electrode plate of the above (1).

Example 17 (Comparative)

A positive electrode plate and a battery were prepared and various evaluations were carried out, as in Example 1, except for 1) using an NCM mixed powder L containing the NCM raw material powders 7 and 13 indicated in Table 1A to 1C in a blend proportion (in weight ratio) of 90 : 10 in place of the mixed powder A, and 2) altering the firing temperature therein to 950°C, in the preparation of the positive electrode plate of the above (1).

Example 18 (Comparative)

A positive electrode plate and a battery were prepared and various evaluations were carried out, as in Example 1, except for 1) using an NCM mixed powder M containing the NCM raw material powders 7 and 13 indicated in Table 1A to 1C in a blend proportion (in weight ratio) of 95 : 5 in place of the mixed powder A, and 2) altering the firing temperature therein to 950°C, in the preparation of the positive electrode plate of the above (1).

Results

Table 2 shows the specification of the positive electrode plate prepared in each Example and evaluation results of the cell therein. Then, the charge/discharge characteristic was compared under the same rate and same number of cycles, and the retention rate of the discharge capacity in predetermined cycles (= $100 \times$ (a discharge capacity in the predetermined cycles) / (a first-cycle discharge capacity)) was calculated. Here, in each Example, the $LiOH \cdot Li_2SO_4$-based solid electrolyte was analyzed by X-ray diffraction (XRD), and identified to be $3LiOH \cdot Li_2SO_4$.

[Table 1A]

Table 1A

| | Raw material powder | Blend proportion of raw material powders in each mixed powder (% by weight) | | | | | | | | | | | |
| | | A | B | C | D | E | F | G | H | I | J | K | L | M |
|---|---|---|---|---|---|---|---|---|---|---|---|---|---|---|
| 1 | NCM523 powder of 8 $\mu$m in volume base D50 particle size, obtained by mixing a $(Ni_{0.5}Co_{0.2}Mn_{0.3})(OH)_2$ powder and an $Li_2CO_3$ powder weighed to give a molar ratio of Li/(Ni+Co+Mn) being 1.15, and then firing the mixture at 750°C | 80 | 90 | - | - | - | - | - | - | - | - | - | - | - |

(continued)

| | Raw material powder | Blend proportion of raw material powders in each mixed powder (% by weight) | | | | | | | | | | | | |
|---|---|---|---|---|---|---|---|---|---|---|---|---|---|---|
| | | A | B | C | D | E | F | G | H | I | J | K | L | M |
| 2 | NCM523-containing powder obtained by adding 2.45% by weight (blend-inclusive) of $Li_3BO_3$ to the raw material powder 1 and regulating the volume base D50 particle size to 0.4 $\mu$m | 20 | - | - | - | - | - | - | - | - | - | - | - | - |
| 3 | NCM523-containing powder obtained by adding 9.2% by weight (blend-inclusive) of $Li_3BO_3$ to the raw material powder 1 and regulating the volume base D50 particle size to 0.4 $\mu$m | - | 10 | - | - | - | - | - | - | - | - | - | - | - |
| 4 | NCM523 powder obtained by regulating the volume base D50 particle size of the raw material powder 1 to 5.5 $\mu$m | - | - | - | - | - | - | - | - | - | - | - | - | - |
| 5 | NCM523-containing powder obtained by adding 1.0% by weight (blend-inclusive) of $Li_3PO_4$ to the raw material powder 1 and regulating the volume base D50 particle size to 5.5 $\mu$m | - | - | - | - | - | - | - | - | - | - | - | - | - |
| 6 | NCM523-containing powder obtained by adding 5.0% by weight (blend-inclusive) of $Li_3PO_4$ to the raw material powder 1 and regulating the volume base D50 particle size to 5.5 $\mu$m | - | - | - | - | - | - | - | - | - | - | - | - | - |
| 7 | NCM361 powder of 6.5 $\mu$m in volume base D50 particle size, obtained by mixing a $(Ni_{0.3}Co_{0.6}Mn_{0.1})(OH)_2$ powder and the $Li_2CO_3$ powder weighed to give a molar ratio of Li/(Ni+Co+Mn) being 1.15, and then firing the mixture at 850°C | - | - | 90 | 95 | 95 | 95 | 95 | 95 | - | - | - | 90 | 95 |

(continued)

| Raw material powder | | Blend proportion of raw material powders in each mixed powder (% by weight) | | | | | | | | | | | | |
|---|---|---|---|---|---|---|---|---|---|---|---|---|---|---|
| | | A | B | C | D | E | F | G | H | I | J | K | L | M |
| 8 | NCM361-containing powder obtained by adding 9.2% by weight (blend-inclusive) of $Li_3BO_3$ to the raw material powder 7 and regulating the volume base D50 particle size to 0.4 $\mu$m | - | - | 10 | 5 | - | - | - | - | - | - | - | - | - |
| The "NCM523" means $Li(Ni_{0.5}Co_{0.2}Mn_{0.3})O_2$, and the "NCM361" means $Li(Ni_{0.3}Co_{0.6}Mn_{0.1})O_2$. The "% by weight (blend-inclusive)" means a weight percentage of a powder added when the total amount of a mixture after the addition is taken to be 100% by weight. | | | | | | | | | | | | | | |

[Table 1B]

Table 1B

| Raw material powder | | Blend proportion of raw material powders in each mixed powder (% by weight) | | | | | | | | | | | | |
|---|---|---|---|---|---|---|---|---|---|---|---|---|---|---|
| | | A | B | C | D | E | F | G | H | I | J | K | L | M |
| 9 | NCM361-containing powder obtained by adding 16.8% by weight (blend-inclusive) of $Li_3BO_3$ to the raw material powder 7 and regulating the volume base D50 particle size to 0.4 $\mu$m | - | - | - | - | 5 | - | - | - | - | - | - | - | - |
| 10 | NCM361-containing powder obtained by adding 51% by weight (blend-inclusive) of $Li_3BO_3$ to the raw material powder 7 and regulating the volume base D50 particle size to 0.4 $\mu$m | - | - | - | - | - | 5 | - | - | - | - | - | - | - |
| 11 | NCM361-containing powder obtained by adding 16.8% by weight (blend-inclusive) of $Li_2SO_4$ to the raw material powder 7 and regulating the volume base D50 particle size to 0.4 $\mu$m | - | - | - | - | - | - | 5 | - | - | - | - | - | - |
| 12 | NCM361-containing powder obtained by adding 51% by weight (blend-inclusive) of $Li_2SO_4$ to the raw material powder 7 and regulating the volume base D50 particle size to 0.4 $\mu$m | - | - | - | - | - | - | - | 5 | - | - | - | - | - |
| 13 | NCM361 powder obtained by regulating the volume base D50 particle size of the raw material powder 7 to 0.4 $\mu$m | - | - | - | - | - | - | - | - | - | - | - | 10 | 5 |

(continued)

| Raw material powder | | Blend proportion of raw material powders in each mixed powder (% by weight) | | | | | | | | | | | | |
|---|---|---|---|---|---|---|---|---|---|---|---|---|---|---|
| | | A | B | C | D | E | F | G | H | I | J | K | L | M |
| 14 | NCM361 powder obtained by regulating the volume base D50 particle size of the raw material powder 7 to 4.3 $\mu$m | - | - | - | - | - | - | - | - | - | - | - | - | - |
| 15 | NCM361 powder obtained by mixing the $(Ni_{0.3}Co_{0.6}Mn_{0.1})(OH)_2$ powder and an $Li_2CO_3$ powder weighed to give a molar ratio of Li/(Ni+Co+Mn) being 1.15, and then firing the mixture at 950°C, and regulating the volume base D50 particle size to 1.9 $\mu$m | - | - | - | - | - | - | - | - | - | - | - | - | - |
| 16 | NCM361-containing powder of 7.4 $\mu$m in volume base D50 particle size, obtained by adding 0.74% by weight (blend-inclusive) of the $Li_3PO_4$ powder to the $(Ni_{0.3}Co_{0.6}Mn_{0.1})(OH)_2$ powder and the $Li_2CO_3$ powder weighed to give a molar ratio of Li/(Ni+Co+Mn) being 1.15, and mixing, and then firing the mixture at 870°C | - | - | - | - | - | - | - | - | 90 | - | - | - | - |

The "NCM523" means $Li(Ni_{0.5}Co_{0.2}Mn_{0.3})O_2$, and the "NCM361" means $Li(Ni_{0.3}Co_{0.6}Mn_{0.1})O_2$.
The "% by weight (blend-inclusive)" means a weight percentage of a powder added when the total amount of a mixture after the addition is taken to be 100% by weight.

[Table 1C]

Table 1C

| Raw material powder | | Blend proportion of raw material powders in each mixed powder (% by weight) | | | | | | | | | | | | |
|---|---|---|---|---|---|---|---|---|---|---|---|---|---|---|
| | | A | B | C | D | E | F | G | H | I | J | K | L | M |
| 17 | NCM361-containing powder of 7.5 $\mu$m in volume base D50 particle size, obtained by adding 1.8% by weight (blend-inclusive) of the $Li_3PO_4$ powder to the $(Ni_{0.3}Co_{0.6}Mn_{0.1})(OH)_2$ powder and the $Li_2CO_3$ powder weighed to give a molar ratio of Li/(Ni+Co+Mn) being 1.15, and mixing, and then firing the mixture at 870°C | - | - | - | - | - | - | - | - | - | 90 | - | - | - |

(continued)

| Raw material powder | | Blend proportion of raw material powders in each mixed powder (% by weight) | | | | | | | | | | | | |
|---|---|---|---|---|---|---|---|---|---|---|---|---|---|---|
| | | A | B | C | D | E | F | G | H | I | J | K | L | M |
| 18 | NCM361-containing powder od 7.7 $\mu$m in volume base D50 particle size, obtained by adding 3.6% by weight (blend-inclusive) of the $Li_3PO_4$ powder to the $(Ni_{0.3}Co_{0.6}Mn_{0.1})(OH)_2$ powder and the $Li_2CO_3$ powder weighed to give a molar ratio of Li/(Ni+Co+Mn) being 1.15, and mixing, and then firing the mixture at 870°C | - | - | - | - | - | - | - | - | - | - | 90 | - | - |
| 19 | NCM361 powder of 7.0 $\mu$m in volume base D50 particle size, obtained by mixing the $(Ni_{0.3}Co_{0.6}Mn_{0.1})(OH)_2$ powder and the $Li_2CO_3$ powder weighed to give a molar ratio of Li/(Ni+Co+Mn) being 1.15, and then firing the mixture at 750°C | - | - | - | - | - | - | - | - | - | - | - | - | - |
| 20 | NCM361-containing powder obtained by adding 9.2 % by weight (blend-inclusive) of $Li_3BO_3$ and 1.0% by weight (blend-inclusive) of $Li_3PO_4$ to the raw material powder 19, and regulating the volume base D50 particle size to 0.5 $\mu$m | - | - | - | - | - | - | - | - | 10 | - | - | - | - |
| 21 | NCM361-containing powder obtained by adding 9.2 % by weight (blend-inclusive) of $Li_3BO_3$ and 2.5% by weight (blend-inclusive) of $Li_3PO_4$ to the raw material powder 19, and regulating the volume base D50 particle size to 0.5 $\mu$m | - | - | - | - | - | - | - | - | - | 10 | - | - | - |
| 22 | NCM361-containing powder obtained by adding 9.2 % by weight (blend-inclusive) of $Li_3BO_3$ and 5.0% by weight (blend-inclusive) of $Li_3PO_4$ to the raw material powder 19, and regulating the volume base D50 particle size to 0.5 $\mu$m | - | - | - | - | - | - | - | - | - | - | 10 | - | - |
| The "NCM523" means $Li(Ni_{0.5}Co_{0.2}Mn_{0.3})O_2$, and the "NCM361" means $Li(Ni_{0.3}Co_{0.6}Mn_{0.1})O_2$. The "% by weight (blend-inclusive)" means a weight percentage of a powder added when the total amount of a mixture after the addition is taken to be 100% by weight. | | | | | | | | | | | | | | |

[Table 2]

Table 2

|  | Amount of additive added to NCM (% by weight (blend-inclusive)) | | | | Degree of orientation (I[003] /I[104]) | Porosity (%) | Mean pore diameter ($\mu$m) | Interfacial length per 1 $\mu$m$^2$ of unit cross-sectional area ($\mu$m) | Molar ratio Li/ (Ni+Co+Mn) | Plate thickness ($\mu$m) | Cycle retention rate (%) |
|---|---|---|---|---|---|---|---|---|---|---|---|
|  | Li$_3$BO$_3$ | Li$_3$PO$_4$ | Li$_2$SO$_4$ | Total |  |  |  |  |  |  |  |
| Example 1 | 0.5 | - | - | 0.5 | 1.59 | 30 | 4.5 | 0.26 | 1.03 | 100 | 91 |
| Example 2 | 1.0 | - | - | 1.0 | 1.53 | 32 | 5.1 | 0.21 | 0.99 | 100 | 84 |
| Example 3 | - | 1.0 | - | 1.0 | 1.43 | 28 | 2.4 | 0.39 | 1.00 | 100 | 86 |
| Example 4 | - | 5.0 | - | 5.0 | 1.49 | 25 | 2.3 | 0.35 | 1.01 | 100 | 80 |
| Example 5 | 1.0 | - | - | 1.0 | 1.90 | 36 | 3.5 | 0.37 | 1.02 | 80 | 93 |
| Example 6 | 0.5 | - | - | 0.5 | 1.63 | 33 | 5.5 | 0.27 | 1.00 | 80 | 80 |
| Example 7 | 1.0 | - | - | 1.0 | 1.86 | 28 | 4.6 | 0.26 | 1.03 | 80 | 76 |
| Example 8 | 5.0 | - | - | 5.0 | 1.81 | 25 | 4.6 | 0.23 | 1.01 | 80 | 79 |
| Example 9 | - | - | 1.0 | 1.0 | 1.98 | 31 | 4.3 | 0.31 | 1.04 | 80 | 77 |
| Example 10 | - | - | 5.0 | 5.0 | 1.95 | 27 | 4.4 | 0.29 | 1.01 | 80 | 80 |
| Example 11 | 1.0 | 1.0 | - | 2.0 | 1.71 | 33 | 5.1 | 0.30 | 1.02 | 80 | 99 |
| Example 12 | 1.0 | 2.5 | - | 3.5 | 1.72 | 33 | 2.9 | 0.34 | 1.01 | 80 | 89 |
| Example 13 | 1.0 | 5.0 | - | 6.0 | 1.66 | 35 | 5.2 | 0.30 | 1.02 | 80 | 97 |

(continued)

| | Amount of additive added to NCM (% by weight (blend-inclusive)) | | | | Degree of orientation (I[003] /I[104]) | Porosity (%) | Mean pore diameter ($\mu$m) | Interfacial length per 1 $\mu m^2$ of unit cross-sectional area ($\mu$m) | Molar ratio Li/ (Ni+Co+Mn) | Plate thickness ($\mu$m) | Cycle retention rate (%) |
|---|---|---|---|---|---|---|---|---|---|---|---|
| | $Li_3BO_3$ | $Li_3PO_4$ | $Li_2SO_4$ | Total | | | | | | | |
| Example 14* | - | - | - | - | 1.25 | 33 | 2.5 | 0.42 | 1.04 | 100 | 68 |
| Example 15* | - | - | - | - | 2.04 | 27 | 1.9 | 0.66 | 1.00 | 80 | 59 |
| Example 16* | - | - | - | - | 178.19 | 33 | 1.7 | 1.14 | 1.02 | 80 | 50 |
| Example 17* | - | - | - | - | 2.18 | 27 | 3.9 | 0.33 | 1.06 | 80 | 69 |
| Example 18* | - | - | - | - | 1.89 | 37 | 3.5 | 0.42 | 1.00 | 80 | 67 |

* represents Comparative Example The "% by weight (blend-inclusive)" means a weight percentage of an additive when the total amount of NCM and the additive is taken to be 100% by weight.

The "amount of an additive added to NCM" refers to an amount of the additive charged in preparation of a sintered plate, but conceivably nearly coincides with the content of the additive in the sintered plate finally obtained.

From the SEM observation and the element mapping (Figures 1 and 2) by EPMA, it could be confirmed that in the NCM (Example 3: see Figure 1) having the additive ($Li_3PO_4$) added therein, as compared with the pure NCM (Example 4 (Comparative): see Figure 2) having no additive such as $Li_3PO_4$, the diffusion of the transition metals into solid electrolyte portions in voids of the positive electrode plate was suppressed. From this fact, it is considered that in the positive electrode plates using NCM having $Li_3PO_4$ added therein (Examples 3, 4 and 11 to 13), the reduction in the Li ionic condition due to the deterioration of the solid electrolyte was alleviated, consequently leading to the improvement in the cycle retention rate. Further, since also in the NCM having $Li_3BO_3$ or $Li_2SO_4$ added therein (Examples 1, 2 and 5 to 10), as compared with the pure NCM, the cycle retention rate was improved, it is considered that the addition of $Li_3BO_3$ or $Li_2SO_4$ had the same effect as the addition of $Li_3PO_4$.

From Figure 3 showing a SEM image (reflection electron image) of a cross-section of the positive electrode plate obtained in Example 8, it could be confirmed that another element other than Ni, Co and Mn was present in the NCM bulk. That is, since the element exhibits a darker color than the NCM part in Figure 3, the element was conceivably an element lighter than Ni, Co and Mn, B (boron). Then, it is considered that the B was present at grain boundaries.

From Figure 4 showing a SEM image (reflection electron image) of a cross-section of the positive electrode plate embedded in a resin obtained in Example 12, it could be confirmed that other elements were present so as to cover pore portions of the sintered plate. In the SEM image, regions of three colors could be confirmed and it is considered that portions in the brightest color were NCM; portions in the darkest color were the resin (C: carbon); and portions in neutral colors of these were portions containing other elements present on the surface of NCM. Since the portions in neutral colors exhibited a color darker than NCM and brighter than the resin, it is considered that the portions contained B (boron) and P (phosphorus) contained in the additives. Then, it is considered that the B and the P were deposited on the NCM surface.

The batteries of Examples 1 to 13 using the positive electrode active materials meeting the requirement of the present invention exhibited significantly higher cycle retention rates than the batteries of Examples 14 to 18 (Comparative) not meeting the requirement of the present invention. It is considered that this was due to that $Li_3BO_3$, $Li_3PO_4$ and/or $Li_2SO_4$ deposited on a part of the surface of the lithium composite oxide suppressed side reactions between the lithium composite oxide and the solid electrolyte, and $Li_3BO_3$, $Li_3PO_4$ and/or $Li_2SO_4$ deposited on a part of a grain boundary relaxed stresses of expansion and contraction of the positive electrode active material. It is considered that this alleviated the phenomena such as the reduction of the Li ionic conduction due to the deterioration of the solid electrolyte, the formation of a high resistance layer to become a hindrance to the Li ionic conduction at interfaces between the positive electrode layer and the solid electrolyte, and the increase in the diffusion resistance between the positive electrode active materials, leading to the improvement in the cycle retention rate.

<Examples 19 to 33>

Examples to be described below are Examples in respect to all-solid-state secondary batteries whose positive electrode and negative electrode were in a form of a mixture.

<u>Example 19</u>

(1) Preparation of a positive electrode active material powder

A commercially available $(Ni_{0.3}Co_{0.6}Mn_{0.1})(OH)_2$ powder (mean particle size: 9 to 10 $\mu$m) and a commercially available $Li_2CO_3$ powder (mean particle size: 3 $\mu$m), which were weighed to give a molar ratio of Li/(Ni+Co+Mn) being 1.07, were mixed, and then held at 950°C for 10 hours to obtain an NCM raw material powder 23. 1.0% by weight (with respect to the total amount of the NCM raw material powder 23 and $Li_3BO_3$) of $Li_3BO_3$ and 1.0% by weight (with respect to the total amount of the NCM raw material powder 23 and $Li_3PO_4$) of $Li_3PO_4$ were added to the NCM raw material powder 23 obtained and mixed, and then held at 950°C for 10 hours to obtain an NCM powder.

(2) Preparation of a negative electrode active material powder

A commercially available carbon powder (mean particle size: 10 to 14 $\mu$m) was prepared.

(3) Preparation of a solid electrolyte

(3a) Preparation of a raw material powder

A $Li_2SO_4$ powder (commercially available product, purity: 99% or higher), a LiOH powder (commercially available product, purity: 98% or higher) and $Li_3BO_3$ (commercially available product, purity: 99% or higher) were mixed so that

$Li_2SO_4$ : LiOH : $Li_3BO_3$ = 1 : 2.2 : 0.05 (in molar ratio) to obtain a raw material mixed powder. These powders were handled in a glove box in an Ar atmosphere and enough caution was taken so as not to cause deterioration such as moisture absorption.

(3b) Melting synthesis

The raw material mixed powder was placed in an Ar atmosphere in a high-purity alumina-made crucible. The crucible was set in an electric furnace, and heat treated at 430°C for 2 hours in an Ar atmosphere to prepare a melt. Successively, the melt was cooled at 100°C/h in the electric furnace to form a solidified material.

(3c) Milling

The resulting solidified material was milled in a mortar in a glove box in an Ar atmosphere and further milled using grinding balls to obtain a solid electrolyte powder having a volume base D50 particle size of 1 to 20 $\mu$m.

(4) Preparation of an all-solid-state battery

(4a) Preparation of a positive electrode mixture powder and a negative electrode mixture powder

The positive electrode active material powder obtained in the above (1), the solid electrolyte powder obtained in the above (3) and an electron conductive auxiliary (acetylene black (commercially available product)) were weighed so as to give a volume ratio of 60 : 40 : 2 in volume ratio, and mixed in a mortar to prepare a positive electrode mixture powder. Similarly, the negative electrode active material powder obtained in the above (2), the solid electrolyte powder obtained in the above (3) and an electron conductive auxiliary (acetylene black (commercially available product)) were weighed so as to give a volume ratio of 60 : 40 : 2, and mixed in a mortar to prepare a negative electrode mixture powder.

(4b) Press forming

The corresponding powders were placed and pressed at 100 MPa in a press die of 10 mm in hole diameter so as to form a positive electrode layer, a solid electrolyte layer and a negative electrode layer in order so the thicknesses as to become 100 $\mu$m, 500 $\mu$m and 110 $\mu$m, respectively. After the three layers were thus laminated, the laminate was pressed at 150 MPa to obtain a press formed body.

(4c) Installation of pressing jigs

The press formed body was sandwiched by a pair of stainless steel plates so as to make a layer structure of stainless steel plate/positive electrode layer/solid electrolyte layer/negative electrode layer/stainless steel plate, and was put in a state that the press formed body together with the stainless steel plates was held at 150 MPa, to obtain an all-solid-state battery as a cell for evaluation.

(5) Evaluations

(5a) Measurement of the molar ratio of metal elements in the positive electrode layer

The molar ratio Li/(Ni+Co+Mn) of the Li content in the positive electrode layer prepared in the above (1) to the total content of Ni, Co and Mn therein was calculated from the measurement result of metal element analysis by inductively coupled plasma atomic emission spectrometry (ICP-AES method). The result is shown in Table 3.

(5b) Identification of the solid electrolyte by XRD

The LiOH·$Li_2SO_4$-based solid electrolyte obtained in the above (3c) was analyzed by X-ray diffraction (XRD), and was identified as 3LiOH·$Li_2SO_4$.

(5c) Evaluation of the charge/discharge (cycle retention rate)

For the battery prepared in the above (4), the discharge capacity of the battery at an operating temperature of 150°C was measured in the voltage range of 4.15 V to 2.0 V. The measurement was carried out by carrying out constant current/constant voltage charging until the battery voltage reached the upper limit of the above voltage range and carrying out discharging until the battery voltage reached the lower limit thereof. This test was repeated (cycle test), and the retention rate of the discharge capacity in predetermined cycles (= 100 × (a discharge capacity in the predetermined cycles) / (a first-cycle discharge capacity)) was calculated. The result is shown in Table 3.

(5d) Measurement of the filling rate

The filling rate (% by volume) of the active material of each of the positive electrode and the negative electrode of the all-solid-state battery prepared in the above (4) was measured as follows. First, the all-solid-state battery was cross-sectionally polished by ion milling, and then, the polished cross-section of the positive electrode (or the negative electrode) was observed by a SEM to acquire a cross-sectional SEM image. The SEM image was taken as an image of a magnification of 1,000 times. The acquired image was subjected to a binarization process using image analysis software (manufactured by Media Cybernetics, Inc., Image-Pro Premier). The threshold in the binarization was set by using the Otsu's binarization as a discriminant analysis method. Based on the acquired binarized image, the filling rate F (%) of the positive electrode active material (or the negative electrode active material) of the positive electrode (or the negative electrode) was calculated by the following expression:

$$\text{Filling rate } F\ (\%) = [S_A/(S_A + S_B)] \times 100$$

wherein $S_A$ is an area of portions the positive electrode active material (or the negative electrode active material) occupies in the binarized image; and $S_B$ is an area of portions excluding the positive electrode active material (or the negative electrode active material) in the binarized image, and contains the area occupied by the solid electrolyte, the electron conductive auxiliary and voids. The result is shown in Table 3.

Example 20

A battery was prepared and evaluated as in Example 19, except for preparing a negative electrode active material powder as follows, and measuring the discharge capacity of the battery at an operating temperature of 150°C in the voltage range of 2.7 V to 1.5 V in the charge/discharge evaluation of the above (5c).

(Preparation of a negative electrode active material powder)

A commercially available TiOz powder (mean particle size: 1 $\mu$m or smaller) and a commercially available $Li_2CO_3$ powder (mean particle size: 3 $\mu$m) were mixed so that the molar ratio of Li/Ti became 0.84, and then held at 1,000°C for 2 hours to obtain a powder composed of LTO particles and having a mean particle size of 3.5 $\mu$m.

Example 21

A battery was prepared and evaluated as in Example 19, except for adding 1.0% by weight (with respect to the total amount of the NCM raw material powder 23 and $Li_3BO_3$) of $Li_3BO_3$ and 2.5% by weight (with respect to the total amount of the NCM raw material powder 23 and $Li_3PO_4$) of $Li_3PO_4$ to the NCM raw material powder 23 and mixing, and then holding the mixture at 950°C for 10 hours, in the preparation of the positive electrode active material powder of the above (1), to obtain an NCM powder.

Example 22

A battery was prepared and evaluated as in Example 19, except for adding 1.0% by weight (with respect to the total amount of the NCM raw material powder 23 and $Li_3BO_3$) of $Li_3BO_3$ and 5.0% by weight (with respect to the total amount of the NCM raw material powder 23 and $Li_3PO_4$) of $Li_3PO_4$ to the NCM raw material powder 23 and mixing, and then holding the mixture at 950°C for 10 hours, in the preparation of the positive electrode active material powder of the above (1), to obtain an NCM powder.

Example 23

A battery was prepared and evaluated as in Example 19, except for adding 1.0% by weight (with respect to the total amount of the NCM raw material powder 23 and $Li_3PO_4$) of $Li_3PO_4$ to the NCM raw material powder 23 and mixing, and then holding the mixture at 950°C for 10 hours, in the preparation of the positive electrode active material powder of the above (1), to obtain an NCM powder.

Example 24

A battery was prepared and evaluated as in Example 19, except for adding 5.0% by weight (with respect to the total amount of the NCM raw material powder 23 and $Li_3PO_4$) of $Li_3PO_4$ to the NCM raw material powder 23 and mixing, and then holding the mixture at 950°C for 10 hours, in the preparation of the positive electrode active material powder of the above (1), to obtain an NCM powder.

Example 25

A battery was prepared and evaluated as in Example 19, except for adding 1.0% by weight (with respect to the total amount of the NCM raw material powder 23 and $Li_2SO_4$) of $Li_2SO_4$ to the NCM raw material powder 23 and mixing, and then holding the mixture at 950°C for 10 hours, in the preparation of the positive electrode active material powder of the above (1), to obtain an NCM powder.

Example 26

A battery was prepared and evaluated as in Example 19, except for adding 5.0% by weight (with respect to the total amount of the NCM raw material powder 23 and $Li_2SO_4$) of $Li_2SO_4$ to the NCM raw material powder 23 and mixing, and then holding the mixture at 950°C for 10 hours, in the preparation of the positive electrode active material powder of the above (1), to obtain an NCM powder.

Example 27

A battery was prepared and evaluated as in Example 19, except for adding 1.0% by weight (with respect to the total amount of the NCM raw material powder 23 and $Li_3BO_3$) of $Li_3BO_3$ to the NCM raw material powder 23 and mixing, and then holding the mixture at 950°C for 10 hours, in the preparation of the positive electrode active material powder of the above (1), to obtain an NCM powder.

Example 28

A battery was prepared and evaluated as in Example 19, except for adding 5.0% by weight (with respect to the total amount of the NCM raw material powder 23 and $Li_3BO_3$) of $Li_3BO_3$ to the NCM raw material powder 23 and mixing, and then holding the mixture at 950°C for 10 hours, in the preparation of the positive electrode active material powder of the above (1), to obtain an NCM powder.

Example 29

A battery was prepared and evaluated as in Example 19, except for preparing a positive electrode active material powder as follows.

(1') Preparation of a positive electrode active material powder

A commercially available $(Ni_{0.5}Co_{0.2}Mn_{0.3})(OH)_2$ powder (mean particle size: 9 $\mu$m) and a commercially available $Li_2CO_3$ powder (mean particle size: 3 $\mu$m), which were weighed to give a molar ratio of Li/(Ni+Co+Mn) being 1.05, were mixed, and then held at 920°C for 10 hours to obtain an NCM raw material powder 24. 1.0% by weight (with respect to the total amount of the NCM raw material powder 24 and $Li_3BO_3$) of $Li_3BO_3$ and 1.0% by weight (with respect to the total amount of the NCM raw material powder 24 and $Li_3PO_4$) of $Li_3PO_4$ were added to the resulting NCM raw material powder 24 and mixing, and then holding the mixture at 920°C for 10 hours to obtain an NCM powder.

Example 30

A battery was prepared and evaluated as in Example 29, except for adding 1.0% by weight (with respect to the total amount of the NCM raw material powder 24 and $Li_3PO_4$) of $Li_3PO_4$ to the NCM raw material powder 24 and mixing, and then holding the mixture at 920°C for 10 hours, in the preparation of the positive electrode active material powder of the above (1'), to obtain an NCM powder.

Example 31 (Comparative)

A battery was prepared and evaluated as in Example 19, except for not carrying out the addition of $Li_3BO_3$ and $Li_3PO_4$ and the heat treatment thereafter (that is, using the NCM raw material powder 23 as it was as a positive electrode active material powder), in the preparation of the positive electrode active material powder of the above (1).

Example 32 (Comparative)

A battery was prepared and evaluated as in Example 20, except for not carrying out the addition of $Li_3BO_3$ and $Li_3PO_4$ and the heat treatment thereafter (that is, using the NCM raw material powder 23 as it was as a positive electrode active material powder), in the preparation of the positive electrode active material powder of the above (1).

Example 33 (Comparative)

A battery was prepared and evaluated as in Example 29, except for not carrying out the addition of $Li_3BO_3$ and $Li_3PO_4$ and the heat treatment thereafter (that is, using the NCM raw material powder 24 as it was as a positive electrode active material powder), in the preparation of the positive electrode active material powder of the above (1').

Results

Table 3 shows the specification of the mixture cell prepared in each Example and evaluation results of the cell therein. Then, the charge/discharge characteristic was compared under the same rate and same number of cycles, and the retention rate of the discharge capacity in predetermined cycles (= $100 \times$ (a discharge capacity in the predetermined cycles) / (a first-cycle discharge capacity)) was calculated and is shown in Table 3. Here, in each Example, the Li-OH·$Li_2SO_4$-based solid electrolyte was analyzed by X-ray diffraction (XRD), and identified to be $3LiOH \cdot Li_2SO_4$.

[Table 3]

Table 3

| | Positive electrode | | | | | | Negative electrode | | Solid electrolyte | Cycle retention rate (%) |
| | Amount of additive added to NCM | | | | Molar ratio | Filling rate of active material (% by volume) | Material | Filling rate of active material (% by volume) | | |
| | (% by weight (blend-inclusive)) | | | | $Li/(Ni+Co+Mn)$ | | | | | |
| | $Li_3BO_3$ | $Li_3PO_4$ | $Li_2SO_4$ | Total | | | | | | |
|---|---|---|---|---|---|---|---|---|---|---|
| Example 19 | 1 | 1 | - | 2 | 1.02 | 61 | carbon | 60 | 2.2LHS-0.05LBO | 93 |
| Example 20 | 1 | 1 | - | 2 | 1.02 | 61 | LTO | 59 | 2.2LHS-0.05LBO | 90 |
| Example 21 | 1 | 2.5 | - | 3.5 | 1.01 | 60 | carbon | 61 | 2.2LHS-0.05LBO | 85 |
| Example 22 | 1 | 5 | - | 6 | 1.00 | 60 | carbon | 58 | 2.2LHS-0.05LBO | 87 |
| Example 23 | - | 1 | - | 1 | 1.04 | 59 | carbon | 60 | 2.2LHS-0.05LBO | 83 |
| Example 24 | - | 5 | - | 5 | 1.02 | 60 | carbon | 61 | 2.2LHS-0.05LBO | 80 |
| Example 25 | - | - | 1 | 1 | 1.03 | 61 | carbon | 59 | 2.2LHS-0.05LBO | 75 |
| Example 26 | - | - | 5 | 5 | 1.02 | 60 | carbon | 61 | 2.2LHS-0.05LBO | 78 |
| Example 27 | 1 | - | - | 1 | 1.03 | 59 | carbon | 59 | 2.2LHS-0.05LBO | 74 |
| Example 28 | 5 | - | - | 5 | 1.00 | 60 | carbon | 60 | 2.2LHS-0.05LBO | 80 |
| Example 29 | 1 | 1 | - | 2 | 1.03 | 60 | carbon | 60 | 2.2LHS-0.05LBO | 91 |
| Example 30 | - | 1 | - | 1 | 1.04 | 58 | carbon | 59 | 2.2LHS-0.05LBO | 81 |

EP 4 270 546 A1

(continued)

| | Positive electrode | | | | | | Negative electrode | | Solid electrolyte | Cycle retention rate (%) |
| | Amount of additive added to NCM | | | | Molar ratio | Filling rate of active material (% by volume) | Material | Filling rate of active material (% by volume) | | |
| | (% by weight (blend-inclusive)) | | | | Li/ (Ni+Co+Mn) | | | | | |
| | $Li_3BO_3$ | $Li_3PO_4$ | $Li_2SO_4$ | Total | | | | | | |
| Example 31* | - | - | - | - | 1.04 | 61 | carbon | 62 | 2.2LHS-0.05LBO | 71 |
| Example 32* | - | - | - | - | 1.04 | 60 | LTO | 60 | 2.2LHS-0.05LBO | 64 |
| Example 33* | - | - | - | - | 1.02 | 61 | carbon | 59 | 2.2LHS-0.05LBO | 69 |
| * represents Comparative Example<br>The "% by weight (blend-inclusive)" means a weight percentage of an additive when the total amount of NCM and the additive is taken to be 100% by weight.<br>2.2LHS-0.05LBO: an $LiOH \cdot Li_2SO_4$-based solid electrolyte (identified to be $3LiOH \cdot Li_2SO_4$ by XRD) synthesized in a blend composition $LiOH:Li_2SO_4:Li_3BO_3 = 2.2:1:0.05$ | | | | | | | | | | |

Also in the all-solid-state secondary batteries whose positive electrode and negative electrode were in forms of mixtures, the batteries of Examples 19 to 30 using the positive electrode active materials meeting the requirement of the present invention exhibited significantly higher cycle retention rates than the batteries of Examples 31 to 33 (Comparative) not meeting the requirement of the present invention. It is considered that the improvement in the cycle retention rate may have been achieved thanks to the suppression of side reactions between the lithium composite oxide and the solid electrolyte by $Li_3BO_3$, $Li_3PO_4$ and/or $Li_2SO_4$ deposited on a part of the surface of the lithium composite oxide, the relaxation of stresses of expansion and contraction of the positive electrode active material by $Li_3BO_3$, $Li_3PO_4$ and/or $Li_2SO_4$ deposited on a part of a grain boundary, and the like, which were confirmed in the all-solid-state secondary batteries in which the positive electrode and the negative electrode were in forms of the sintered plates, also in the batteries in the mixture forms.

**Claims**

1. A positive electrode active material to be used for a lithium ion secondary battery,
   wherein the positive electrode active material comprises a lithium composite oxide having a layered rock salt structure containing Li, Ni, Co and Mn, and further comprises at least one additive selected from $Li_3BO_3$, $Li_3PO_4$ and $Li_2SO_4$.

2. The positive electrode active material according to claim 1, wherein the additive is present in a state of being deposited on at least a part of a grain boundary and of a surface of the lithium composite oxide.

3. The positive electrode active material according to claim 1 or 2, wherein a content of the additive is 0.1 to 10% by weight with respect to a total content of the lithium composite oxide and the additive.

4. The positive electrode active material according to any one of claims 1 to 3, wherein the positive electrode active material is in a form of a sintered plate.

5. The positive electrode active material according to claim 4, wherein the sintered plate has a degree of orientation $I_{[003]}/I_{[104]}$ that is defined as a ratio of a diffraction intensity $I_{[003]}$ derived from the (003) plane to a diffraction intensity $I_{[104]}$ derived from the (104) plane in an XRD profile measured by X-ray diffraction (XRD), of 1.2 to 3.6.

6. The positive electrode active material according to claim 4 or 5, wherein the sintered plate has an interfacial length per 1 $\mu m^2$ of unit cross-sectional area of 0.45 $\mu m$ or shorter.

7. The positive electrode active material according to any one of claims 4 to 6, wherein the sintered plate has a porosity of 20 to 40%.

8. The positive electrode active material according to any one of claims 4 to 7, wherein the sintered plate has a mean pore diameter of 3.5 $\mu m$ or larger.

9. The positive electrode active material according to any one of claims 4 to 8, wherein the sintered plate has a thickness of 30 to 300 $\mu m$.

10. The positive electrode active material according to any one of claims 1 to 3, wherein the positive electrode active material is in a form of a powder.

11. The positive electrode active material according to any one of claims 1 to 10, wherein a molar ratio of Li/(Ni+Co+Mn) in the positive electrode active material is 0.95 to 1.10.

12. A lithium ion secondary battery, comprising:

    a positive electrode layer comprising the positive electrode active material according to any one of claims 1 to 11;
    a negative electrode layer comprising a negative electrode active material; and
    a $LiOH \cdot Li_2SO_4$-based solid electrolyte interposed between the positive electrode layer and the negative electrode layer.

13. The lithium ion secondary battery according to claim 12, wherein the positive electrode active material is in a form of a sintered plate.

**14.** The lithium ion secondary battery according to claim 12, wherein the positive electrode layer comprises a particle of the positive electrode active material, a particle of the $LiOH \cdot Li_2SO_4$-based solid electrolyte and an electron conductive auxiliary in a form of a mixture.

**15.** The lithium ion secondary battery according to any one of claims 12 to 14, wherein the negative electrode active material is $Li_4Ti_5O_{12}$.

**16.** The lithium ion secondary battery according to any one of claims 12 to 15, wherein the $LiOH \cdot Li_2SO_4$-based solid electrolyte comprises a solid electrolyte identified to be $3LiOH \cdot Li_2SO_4$ by X-ray diffraction.

FIG. 1

FIG. 2

FIG. 3

FIG. 4

## INTERNATIONAL SEARCH REPORT

| International application No. |
| --- |
| **PCT/JP2021/045009** |

**A. CLASSIFICATION OF SUBJECT MATTER**

*H01M 4/525*(2010.01)i; *H01M 4/36*(2006.01)i; *H01M 4/485*(2010.01)i; *H01M 4/505*(2010.01)i; *H01M 10/052*(2010.01)i; *H01M 10/0562*(2010.01)i

FI: H01M4/525; H01M4/505; H01M4/485; H01M10/052; H01M10/0562; H01M4/36 C

According to International Patent Classification (IPC) or to both national classification and IPC

**B. FIELDS SEARCHED**

Minimum documentation searched (classification system followed by classification symbols)

H01M4/525; H01M4/36; H01M4/485; H01M4/505; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 6780140 B1 (SUMITOMO CHEMICAL CO., LTD.) 04 November 2020 (2020-11-04) examples 1, 2 | 1-2, 4-5, 9-11 |
| X | JP 5601157 B2 (TOYOTA MOTOR CORP.) 08 October 2014 (2014-10-08) examples 1, 2 | 1-2, 5, 10-11 |
| A | WO 2019/093221 A1 (NGK INSULATORS LTD.) 16 May 2019 (2019-05-16) | 1-16 |
| A | WO 2019/221140 A1 (NGK INSULATORS LTD.) 21 November 2019 (2019-11-21) | 1-16 |
| A | JP 2018-206609 A (GS YUASA CORP.) 27 December 2018 (2018-12-27) | 1-16 |
| A | JP 2006-520525 A (THREE M INNOVATIVE PROPERTIES CO.) 07 September 2006 (2006-09-07) | 1-16 |

☐ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **13 January 2022** | **25 January 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

<table>
<tr><td colspan="2" align="center">INTERNATIONAL SEARCH REPORT<br><b>Information on patent family members</b></td><td>International application No.<br><br><b>PCT/JP2021/045009</b></td></tr>
</table>

| Patent document cited in search report | Publication date (day/month/year) | Patent family member(s) | Publication date (day/month/year) |
|---|---|---|---|
| JP 6780140 B1 | 04 November 2020 | (Family: none) | |
| JP 5601157 B2 | 08 October 2014 | (Family: none) | |
| WO 2019/093221 A1 | 16 May 2019 | KR 10-2020-0057047 A<br>CN 111316489 A | |
| WO 2019/221140 A1 | 21 November 2019 | TW 201947805 A | |
| JP 2018-206609 A | 27 December 2018 | (Family: none) | |
| JP 2006-520525 A | 07 September 2006 | US 2004/0179993 A1<br>WO 2004/084330 A2<br>EP 1604416 A1<br>KR 10-2005-0111764 A<br>CN 1778003 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019093222 A1

- WO 2015151566 A1